# EUROPÄISCHE PATENTSCHRIFT

(11) **EP 3 526 534 B1**
(45) Veröffentlichungstag und Bekanntmachung des Hinweises auf die Patenterteilung: **09.08.2023**
(21) Anmeldenummer: 17771748.5
(22) Anmeldetag: 20.09.2017
(51) Int. Cl.: F26B 15/16, B05B 13/04, B62D 65/18

(54) **TEMPERIERVORRICHTUNG, OBERFLÄCHENBEHANDLUNGSANLAGE, FERTIGUNGSANLAGE UND VERFAHREN ZUR HERSTELLUNG VON PRODUKTEN**
TEMPERING APPARATUS, SURFACE TREATMENT PLANT, PRODUCTION PLANT AND PROCESS FOR MAKING PRODUCTS
APPAREIL POUR RÉGULER LA TEMPÉRATURE, INSTALLATION DE TRAITEMENT DE SURFACES, INSTALLATION DE PRODUCTION ET MÉTHODE DE PRODUCTION

(30) Priorität: 13.10.2016 DE 102016119540
(43) Veröffentlichungstag der Anmeldung: 21.08.2019
(73) Patentinhaber: Eisenmann GmbH, 71032 Böblingen (DE)
(72) Erfinder: WITTEK, Mischa, 75391 Gechingen (DE); MOLL, Mathias, 71093 Weil im Schönbuch (DE)
(74) Vertreter: Ostertag & Partner Patentanwälte mbB
(86) Internationale Anmeldenummer: PCT/EP2017/073784
(87) Internationale Veröffentlichungsnummer: WO 2018/069012

(56) Entgegenhaltungen:
- EP-A2- 0 646 419
- WO-A1-2016/150543
- JP-A- 2007 289 848
- US-A- 5 681 619

## Beschreibung

Die Erfindung betrifft Temperiervorrichtung zum Temperieren von Gegenständen, insbesondere von Fahrzeugkarosserien, mit
a) n Temperierbereichen, in denen jeweils eine Temperatur T.k herrscht, wobei n ≥ 2 ist;
b) einem Fördersystem, welches eine Vielzahl von Transportwagen mit einer Befestigungseinrichtung für wenigstens einen Gegenstand umfasst, auf welchen die Gegenstände durch die Temperierbereiche förderbar sind.

Außerdem betrifft die Erfindung eine Oberflächenbehandlungsanlage zur Oberflächenbehandlung von Gegenständen, insbesondere von Fahrzeugkarosserien, mit mehreren Anlagenzonen, wobei wenigstens eine Anlagenzone eine Temperierzone ist, in welcher die Gegenstände temperierbar sind.

Darüber hinaus betrifft die Erfindung eine Fertigungsanlage und ein Verfahren zur Herstellung von Produkten.

Nachfolgend wird die Erfindung am Beispiel der Herstellung von Fahrzeugen und der Oberflächenbehandlung von Fahrzeugkarosserien erläutert. Das beschriebene Konzept kann jedoch auch bei der Herstellung von anderen Produkten und bei der Oberflächenbehandlung von Gegenständen, die bei der Herstellung von solchen anderen Produkten als Zwischenprodukte erzeugt werden, verwendet werden. Die Fahrzeugkarosserien in den verschiedenen Stadien der Oberflächenbehandlung sind entsprechend Gegenstände bzw. Zwischenprodukte, die bei der Herstellung von Fahrzeugen erzeugt werden.

Nachdem Fahrzeugkarosserien in einer Rohbauanlage aus Einzelteilen zusammengefügt wurden und in einer Korrosionsschutzanlage insbesondere durch eine kataphoretische Tauchlackierung einen Korrosionsschutz erhalten haben, werden sie vor dem Erreichen einer Endmontageanlage in einer Oberflächenbehandlungsanlage einer Oberflächenbehandlung unterzogen, welche insgesamt verhältnismäßig viele einzelne Behandlungsschritte umfasst und in der Regel mit dem Trocknen der kataphoretischen Tauchlackierung beginnt. In der Rohbauanlage werden somit Arbeiten an Fahrzeugkarosserie-Vorstufen, nämlich den einzelnen Phasen beim Zusammenfügen der Fahrzeugkarosserie, durchgeführt, während in der Endmontageanlage somit Arbeiten an Fahrzeugkarosserie-Nachstufen, nämlich den einzelnen Phasen beim Montieren von Komponenten und Bauteilen in und an der fertiggestellten Fahrzeugkarosserie, durchgeführt werden. Vorliegend fallen sowohl solche Fahrzeugkarosserie-Vorstufen als auch solche Fahrzeugkarosserie-Nachstufen unter den Begriff Fahrzeugkarosserie. Bezogen auf den Rohbau können also schon das erste Blechteil und alle dazwischenliegenden Aufbaustrukturen bis zur endgültigen Fahrzeugkarosserie als Fahrzeugkarosserie verstanden werden.

Infolgedessen umfasst eine Anlage zur Herstellung für Fahrzeugkarosserien verschiedene Anlagenzonen, die von den Fahrzeugkarosserien in einer bestimmten Abfolge durchlaufen werden müssen und in denen Arbeiten unterschiedlicher Art an den Fahrzeugkarosserien durchgeführt werden. Zu solchen Arbeiten zählen sowohl Maßnahmen, bei denen aktiv auf die Fahrzeugkarosserie eingewirkt wird oder diese verändert oder ergänzt werden, wie beispielsweise beim Zusammenfügen von Einzelteilen im Rohbau oder der Endmontage, bei einer Applikation von Material oder dem Trocknen der Fahrzeugkarosserien, als auch Maßnahmen, bei denen keine aktive Einwirkung auf die Fahrzeugkarosserie erfolgt, wie beispielsweise ein Audit oder ein Abdunsten der Fahrzeugkarosserie. In der Oberflächenbehandlungsanlage werden die Fahrzeugkarosserien im Rahmen solcher Arbeiten in den unterschiedlichen Anlagenzonen auf unterschiedliche Art behandelt.

In allen Arbeitszonen gibt es Arbeitseinrichtungen, mit oder in denen die entsprechenden Arbeiten ausgeführt werden. In der Oberflächenbehandlungsanlage sind solche Arbeitseinrichtungen entsprechend als Behandlungseinrichtungen ausgebildet.

Bei einer Rohbauanlage werden in verschiedene Anlagenzonen zum Beispiel unterschiedliche Arten der Befestigung von Blechteilen aneinander ausgeführt.

Bei einer kataphoretischen Tauchbehandlung für den Korrosionsschutz in der Korrosionsschutzanlage kann nur eine Anlagezone vorhanden sein. Es können, abhängig von Techniken, die zum Aufbringen eines Korrosionsschutzes gewählt werden und keine Tauchbehandlung oder keine alleinige Tauchbehandlung sind, aber auch mehrere Zonen vorhanden sein.

Die verschiedenen Anlagenzonen in der Oberflächenbehandlungsanlage können im Wesentlichen in Applikationszonen, Temperierzonen und Funktionszonen unterteilt werden, wobei in den einzelnen Anlagenzonen der Oberflächenbehandlungsanlage ein oder mehrere Behandlungseinrichtungen angeordnet sein können.

In den Applikationszonen werden die Fahrzeugkarosserien mit einer Beschichtung oder einem Material versehen. Zum Beispiel zählen hierzu die Applikation von Füller, Basislack oder Decklack, oder das Aufbringen von Material für den Unterbodenschutz oder von Material zum Nahtabdichten.

In den Temperierzonen werden die Fahrzeugkarosserien temperiert. Unter "Temperieren" einer Fahrzeugkarosserie ist die Herbeiführung einer bestimmten Temperatur der Fahrzeugkarosserie gemeint, die diese zunächst noch nicht besitzt. Es kann sich um eine Temperaturerhöhung oder eine Temperaturverringerung handeln. Auch das Abdunsten einer Fahrzeugkarosserie zählt vorliegend als eine Behandlung im Rahmen eines "Temperierens". In der Regel handelt es sich bei einer in einer Temperierzone angeordneten Temperiervorrichtung um einen Trockner.

Temperiervorrichtungen der eingangs genannten Art umfassen mehrere Temperierzonen, in denen unterschiedliche Temperaturen herrschen und von denen zum Beispiel mehrere in einer Aufheizzone angeordnet sind, in denen der Gegenstand sukzessive auf eine Zieltemperatur erwärmt wird, und ein oder mehrere Temperierbereiche in einer Haltezone angeordnet sind, in denen dann die Zieltemperatur gehalten wird und in der der eigentliche Trocknungsvorgang abläuft. In den Temperierbereichen einer Temperiervorrichtung können somit unterschiedliche Temperaturen herrschen; dies muss aber nicht der Fall sein.

In den Funktionszonen erfolgen Maßnahmen, welche den Gesamtprozess und den Gesamtablauf unterstützen. Zum Beispiel zählen hierzu die Durchführungen von Audits und gegebenenfalls das Nachbearbeiten von Oberflächenbereichen der Fahrzeugkarosserie, die nicht dem geforderten Qualitätsstandard entsprechen. Eine andere Funktionszone bildet zum Beispiel eine Speicherzone, in dem Fahrzeugkarosserien zwischengelagert und/oder vorgehalten werden können.

Eine Endmontageanlage soll hier grundsätzlich nur eine einzige Anlagenzone definieren, da die dortigen Einbau- und Montagemaßnahmen zu Arbeiten einer Art zählen.

Bei vom Markt her bekannten Fertigungsanlagen zur Herstellung von Fahrzeugen, und insbesondere in zu solchen Anlagen gehörenden Oberflächenbehandlungsanlagen, werden die Fahrzeugkarosserien nach jeder Behandlung, die einen nachfolgenden Temperier- oder Trockenvorgang erfordert, in einer jeweils separaten Temperiervorrichtung temperiert, welche der Oberflächenbehandlung nachgelagert ist. Für jeden Oberflächenbehandlungsvorgang ist somit eine gesonderte Temperiervorrichtung vorgesehen, in denen die vorhandenen Temperierbereiche und insbesondere die benötigten Zieltemperaturen an den gewünschten Temperiervorgang angepasst sind.

So muss zum Beispiel eine Fahrzeugkarosserie nach der kataphoretischen Tauchbehandlung bei einer höheren Endtemperatur getrocknet werden als nach dem Unterbodenschutz und dem Nahtabdichten oder nach der Beschichtung mit dem Füller, dem Basislack oder dem Decklack. Nach dem Unterbodenschutz und dem Nahtabdichten müssen die Fahrzeugkarosserien in der Regel ihrerseits bei einer höheren Endtemperatur getrocknet werden als nach der Beschichtung mit dem Füller, dem Basislack oder dem Decklack.

US 5681619 A und EP 0646419 A2 offenbaren verschiedene Temperiervorrichtungen.

Es ist Aufgabe der Erfindung, eine Temperiervorrichtung, eine Oberflächenbehandlungsanlage, eine Fertigungsanlage und ein Verfahren der eingangs genannten Art bereitzustellen, welche diesen Gedanken Rechnung tragen.

Diese Aufgabe wird bei einer Temperiervorrichtung der eingangs genannten Art dadurch gelöst, dass
c) das Fördersystem (26) und die Temperierbereiche (24.k) so ausgebildet sind, dass die Gegenstände (10) wahlweise
ca) durch alle n Temperierbereiche (24.k);
   oder
cb) durch eine Anzahl N der Temperierbereiche (24.k) mit N<n förderbar sind.

Die zu temperierenden Gegenstände müssen folglich nicht alle in der Temperiervorrichtung vorhandenen Temperierbereiche durchlaufen, sondern können auch nur in einem Teil der vorhandenen Temperierbereiche temperiert werden. Dies eröffnet die Möglichkeit, dass in einer solchen Temperiervorrichtung auch Gegenstände temperiert werden können, die nicht bei der maximalen Temperatur der Temperiervorrichtung temperiert werden sollen, die in einem der Temperierbereiche herrscht. Die Gegenstände können vielmehr nach durchlaufen nur eines oder einiger der vorhandenen Temperierbereiche aus der Temperiervorrichtung heraus gefördert werden, so dass bestimmte Gegenstände bei einer niedrigeren Zieltemperatur aus der Temperiervorrichtung herausgefördert werden können als andere Gegenstände, die eine demgegenüber höhere Zieltemperatur benötigen. Dies wird weiter unten noch näher erläutert.

Hierfür ist es besonders vorteilhaft, wenn
a) die Temperierbereiche entlang eines Temperierstranges des Fördersystems angeordnet sind, der für jeden vorhandenen Temperierbereich einen Zuführabschnitt definiert, wobei zwei auf dem Temperierstrang benachbart angeordnete Temperierbereiche durch einen jeweiligen Zuführabschnitt fördertechnisch miteinander verbunden sind;
b) wenigstens einer der Zuführabschnitte des Temperierstranges über wenigstens eine Überführungseinrichtung mit einem Bypassstrang des Fördersystems verbunden ist, welcher an zumindest einer Temperiereinrichtung vorbei führt.

Je mehr solcher Zuführabschnitte mit dem Bypassstrang verbunden sind, desto variabler kann die Temperiervorrichtung genutzt werden. Daher ist es insbesondere günstig, wenn mehrere oder alle Zuführabschnitte des Temperierstranges über wenigstens eine Überführungseinrichtung mit dem Bypassstrang des Fördersystems verbunden sind.

Dabei ist es von Vorteil, wenn das Fördersystem ein Schienensystem umfasst, auf welchem die Transportwagen verfahrbar sind, und dass eine jeweilige Überführungseinrichtung durch eine Weicheneinrichtung ausgebildet ist.

Besonders günstig ist es, wenn bei dem Fördersystem jeder Transportwagen ein Transportwagen-Fahrwerk umfasst, welches mittels einer Verbindungseinrichtung mit der Befestigungseinrichtung gekoppelt ist.

Ein derartiges Fördersystem kann besonders gut eingesetzt werden, wenn in wenigstens einem Temperierbereich eine Behandlungseinrichtung angeordnet ist, in der die Gegenstände temperiert werden und welche ein Gehäuse umfasst, in dem ein Behandlungstunnel mit einem Tunnelboden untergebracht ist, wobei der Tunnelboden einen Verbindungsdurchgang aufweist und ein unterhalb des Behandlungstunnels angeordneter Fahrraum für das Transportwagen-Fahrwerk vorhanden ist, derart, dass das Transportwagen-Fahrwerk im Fahrraum bewegbar ist, wobei die Befestigungseinrichtung im Behandlungstunnel mitgeführt wird und sich die Verbindungseinrichtung durch den Verbindungsdurchgang hindurch erstreckt. Auf diese Weise kann eine Trennung des Temperierraumes und des Förderraumes bewirkt werden

In diesem Fall ist es vorteilhaft, wenn die Behandlungseinrichtung Abschirmmittel umfasst, durch welche ein Kontakt wenigstens der Transportwagen-Fahrwerke mit der Tunnelatmosphäre durch den Verbindungsdurchgang hindurch zumindest vermindert wird.

Insbesondere wenn bei dem Fördersystem das Transportwagen-Fahrwerk der Transportwagen eine in Transportrichtung vorauseilende Vorläufereinheit und eine in Transportrichtung nacheilende Nachläufereinheit umfasst, kann das System kurvengängig ausgebildet werden, wenn die Kopplungsstellen durch entsprechende Drehkupplungen ausgebildet sind.

Mit Blick auf eine Kurvengängigkeit der Transportwagen kann es dann vorteilhaft sein, wenn bei dem Fördersystem die Verbindungseinrichtung der Transportwagen wenigstens zwei vertikale Gelenkstreben umfasst, welche die Vorläufereinheit und die Nachläufereinheit mit der Befestigungseinrichtung koppeln.

Für eine individuelle Behandlung bzw. ein individuelles Temperieren der Gegenstände ist es günstig, wenn bei dem Fördersystem die Transportwagen jeweils ein eigenes Antriebssystem mit sich führen, so dass die Transportwagen unabhängig voneinander antreibbar und verfahrbar sind.

Vorzugsweise ist vorgesehen, dass bei dem Fördersystem das Antriebssystem der Transportwagen wenigstens eine Antriebsrolle umfasst, die von dem Transportwagen-Fahrwerk gelagert und auf einer Antriebslauffläche des Schienensystems abrollbar ist, und wenigstens einen Antriebsmotor für die wenigstens eine Antriebsrolle umfasst, welcher von dem Transportwagen-Fahrwerk mitgeführt wird.

Besonders von Vorteil ist es, wenn bei dem Fördersystem wenigstens einer der Transportwagen eine autarke Energieversorgungseinrichtung mit sich führt, mittels welcher der wenigstens eine Antriebsmotor des Transportwagens mit Energie versorgbar ist. Auf diese Weise kann auf eine Installation zur Energieversorgung entlang des Schienensystems verzichtet werden. Eine Störung der Energieversorgung eines Transportwagens beschränkt sich dann stets auf den Transportwagen selbst, so dass ein solcher defekter Transportwagen oder dessen Komponenten der Energieversorgung ausgetauscht werden können, ohne dass andere Transportwagen beeinflusst werden oder Arbeiten am Schienensystem erforderlich sind. Wenn Störungen der Energieversorgung auftreten, wenn der Transportwagen sich außerhalb des Trockners befindet, kann der Transportwagen isoliert von der Transportstrecke und den weiteren Transportwagen gewartet werden, ohne dass das Fördersystem beeinträchtigt wird.

Dabei ist es besonders günstig, wenn bei dem Fördersystem die autarke Energieversorgungseinrichtung wenigstens einen wiederaufladbaren Energiespeicher umfasst. Hierfür kommen insbesondere Akkumulatoren oder Kondensatoren in Betracht.

Was die Nutzungs-Flexibilität betrifft, ist vorteilhaft, wenn die Gegenstände mittels des Fördersystems in beliebiger Abfolge durch zwei, mehrere oder alle Temperierzonen förderbar sind.

Die oben genannte Aufgabe wird bei einer Oberflächenbehandlungsanlage der eingangs genannten Art dadurch gelöst, dass in der Temperierzone eine Temperiervorrichtung mit einigen oder allen der oben erläuterten Merkmale angeordnet ist. Die Vorteile entsprechen den Vorteilen, die im Zusammenhang mit der Temperiervorrichtung erläutert wurden.

Dabei ist es besonders vorteilhaft, wenn das Fördersystem der Temperiervorrichtung das Fördersystem der Oberflächenbehandlungsanlage ist, so dass die Gegenstände mit ein und demselben Fördersystem durch die Anlagenzonen der Anlage förderbar sind. Auf diese Weise sind zwischen der Temperierzone und anderen Anlagenzone keine Umsetz- oder Übergabeeinrichtungen erforderlich.

Es ist somit möglich, in der Oberflächenbehandlungsanlage eine Abstimmung der Anlagenzonen und des Fördersystem zu erreichen, durch welche ein einziges Fördersystem für alle Anlagenzonen der Oberflächenbehandlungsanlage geeignet ist. Hierdurch sind keine Übergaben von einem ersten Fördersystem auf ein zweites Fördersystem, welches vom ersten Fördersystem verschieden ist, mehr notwendig, wodurch der Gesamtablauf der Oberflächenbehandlung effektiver, mit geringerem baulichen Aufwand und dadurch zeitsparend und kostengünstig durchgeführt werden kann.

In diesem Zusammenhang ist es besonders günstig, wenn in wenigstens einer Anlagenzone, die nicht die Temperierzone ist, wenigstens eine Behandlungseinrichtung angeordnet ist, in der die Gegenstände behandelt werden und welche ein Gehäuse umfasst, in dem ein Behandlungstunnel mit einem Tunnelboden untergebracht ist, wobei der Tunnelboden einen Verbindungsdurchgang aufweist und ein unterhalb des Behandlungstunnels angeordneter Fahrraum für das Transportwagen-Fahrwerk vorhanden ist, derart, dass das Transportwagen-Fahrwerk im Fahrraum bewegbar ist, wobei die Befestigungseinrichtung im Behandlungstunnel mitgeführt wird und sich die Verbindungseinrichtung durch den Verbindungsdurchgang hindurch erstreckt. Somit sind die Temperiereinrichtungen und die Behandlungseinrichtung gleichartig konzeptioniert.

Auch hier ist es vorteilhaft, wenn die Behandlungseinrichtung Abschirmmittel umfasst, durch welche ein Kontakt wenigstens der Transportwagen-Fahrwerke mit der Tunnelatmosphäre durch den Verbindungsdurchgang hindurch zumindest vermindert wird.

Die Oberflächenbehandlungsanlage kann besonders effektiv betrieben werden, wenn die Gegenstände mittels des Fördersystems in beliebiger Abfolge durch eine, mehrere oder alle Anlagenzonen oder bezogen auf die Behandlungseinrichtungen in beliebiger Abfolge durch eine, mehrere oder alle der Behandlungseinrichtungen einer, mehrerer oder aller Anlagenzonen gefördert werden können. Somit können also auch die Behandlungseinrichtungen, die nicht von der Temperiervorrichtung umfasst sind, in beliebiger Abfolge erreicht werden, so dass diese Behandlungseinrichtungen für die Gegenstände in verschiedenen Phasen ihrer Oberflächenbehandlung genutzt werden können. Anders als beim Stand der Technik, bei dem die erforderlichen Behandlungseinrichtungen fördertechnisch in einer bestimmten Reihenfolge miteinander verbunden sind, gibt es folglich keine feste Abfolge, die ein Gegenstand durchlaufen muss.

Die oben genannte Aufgabe wird bei einer Fertigungsanlage der eingangs genannten Art dadurch gelöst, dass sie eine Oberflächenbehandlungsanlage mit einigen oder allen der oben erläuterten Merkmale umfasst.

Bei einem Verfahren der eingangs genannten Art wird die oben genannte Aufgabe dadurch gelöst, dass
c) Gegenstände abhängig von dem durchzuführenden Temperierprozess wahlweise
ca) durch alle n Temperierbereiche;
   oder
cb) durch eine Anzahl N der Temperierbereiche mit N<n gefördert werden.

Die hierdurch erzielten Vorteile entsprechen den oben zur Temperiervorrichtung erläuterten Vorteilen.

Dabei wird vorzugsweise eine Temperiervorrichtung mit einigen oder allen der oben zur Temperiervorrichtung erläuterten Merkmale verwendet.

Nochmals vorzugsweise wird eine Fertigungsanlage der oben genannten Art verwendet.

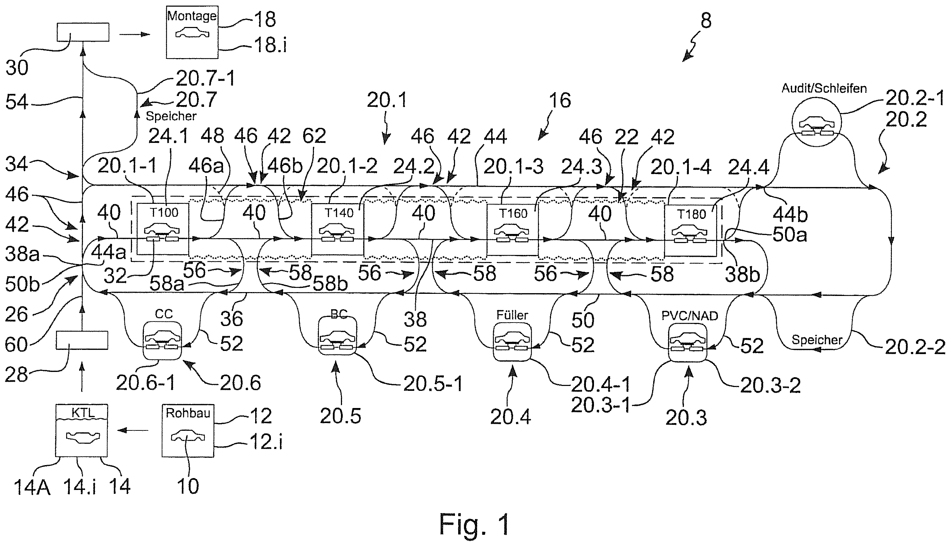

Nachfolgend werden Ausführungsbeispiele der Erfindung anhand der Zeichnungen näher erläutert. In diesen zeigen
- Figur 1: schematisch ein Layout einer Oberflächenbehandlungsanlage für Fahrzeugkarosserien mit mehreren Anlagenzonen unterschiedlicher Funktionalität, in denen die Fahrzeugkarosserien auf unterschiedliche Art behandelt werden, wobei eine der Anlagenzonen durch eine Temperiervorrichtung mit mehreren Temperierbereichen gebildet ist, in denen verschiedene Temperaturen herrschen;

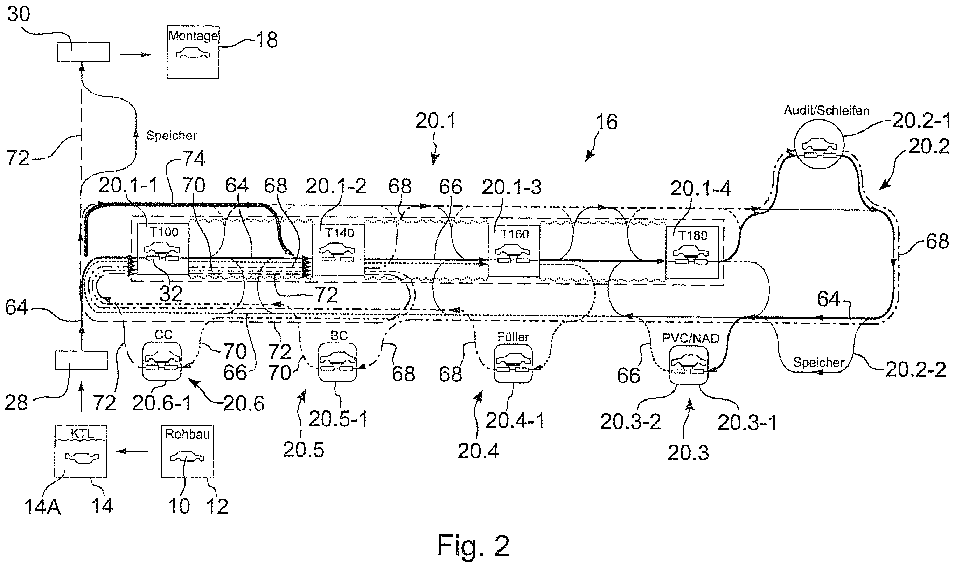

- Figur 2: das Layout nach Figur 1, wobei eine exemplarische Abfolge veranschaulicht ist, mit welcher eine Fahrzeugkarosserie die einzelnen Anlagenzonen und Temperierbereiche durchfahren können;

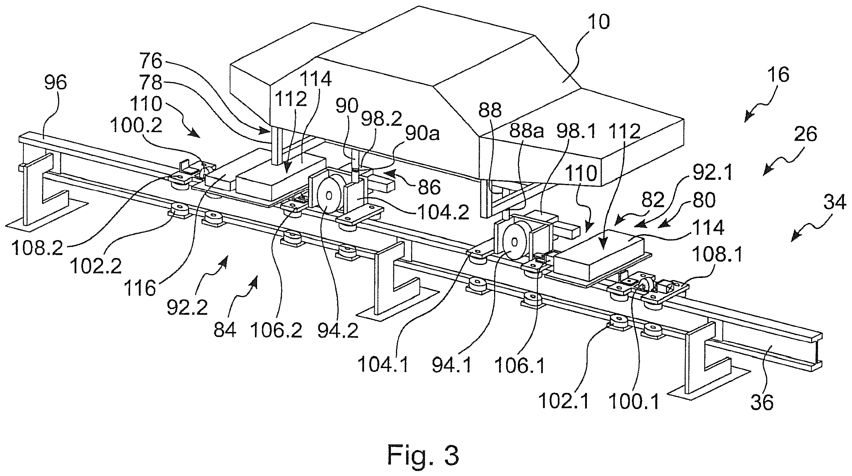

- Figur 3: eine perspektivische Ansicht eines Transportsystems für Fahrzeugkarosserien, wobei eine Tragschiene eines Schienensystems mit einem darauf verfahrbaren Transportwagen gezeigt ist, welcher ein Transportwagen-Fahrwerk umfasst, das über eine Verbindungseinrichtung mit einer Befestigungseinrichtung für Werkstücke verbunden ist;

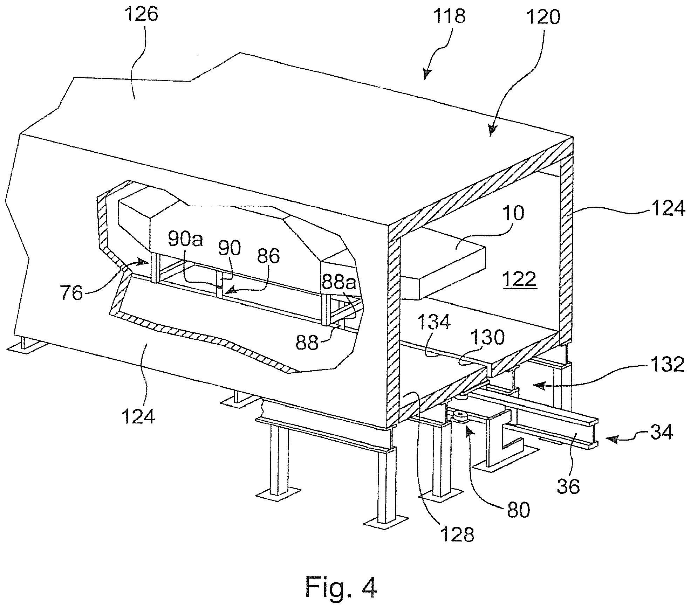

- Figur 4: eine perspektivische Ansicht eines Abschnitts einer Behandlungseinrichtung einer Anlagenzone mit dem Transportsystem nach Figur 3, wobei ein Behandlungstunnel gezeigt ist, dessen Tunnelboden einen zu der Verbindungseinrichtung komplementären Verbindungsdurchgang aufweist, der zu einem Fahrraum für das Transportwagen-Fahrwerk führt, wobei die Befestigungseinrichtung im Behandlungstunnel und das Transportwagen-Fahrwerk im Fahrraum angeordnet sind;

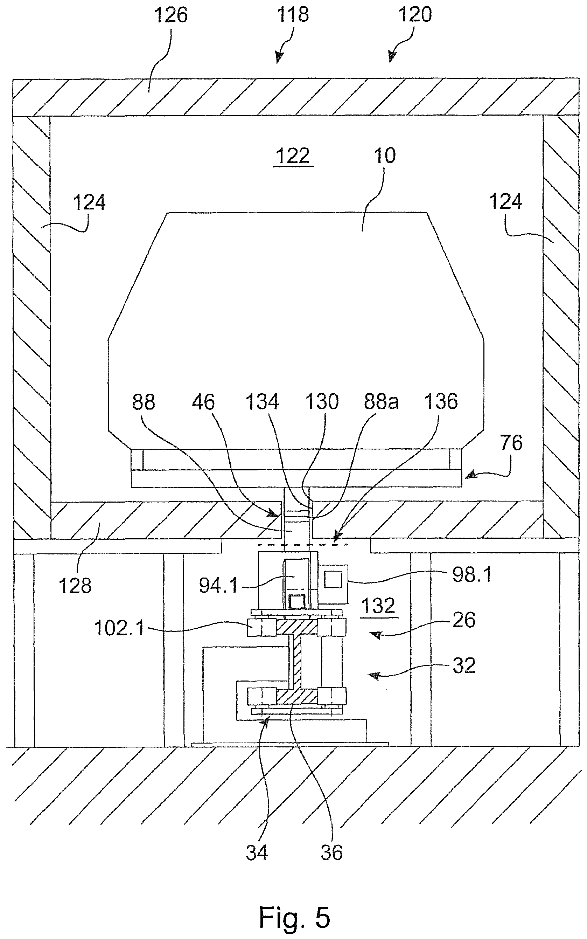

- Figur 5: einen Querschnitt der Behandlungseinrichtung nach Figur 4.

Figur 1 illustriert schematisch eine Fertigungsanlage 8 zur Herstellung von Fahrzeugkarosserien 10, welche ihrerseits einzelne Anlagen 12, 14, 16 und 18 umfasst. Die Fahrzeugkarosserien 10 gelangen nach einer Rohbauanlage 12 in eine Korrosionsschutzanlage 14 und durchlaufen im Anschluss daran eine Oberflächenbehandlungsanlage 16. Dann kommen die Fahrzeugkarosserien 10 in eine Endmontageanlage 18, in welcher die fahrbereiten Kraftfahrzeuge montiert werden. Von den Fahrzeugkarosserien 10 trägt der Übersichtlichkeit halber lediglich eine einzige ein Bezugszeichen.

Die Anlagen 12, 14, 16 und 18 können unterschiedliche, aufeinander folgende Anlagenzonen umfassen, von denen verschiedene Zonen der Rohbauanlage 12, der Korrosionsschutzanlage 14 und der Montageanlage 18 nicht eigens gezeigt, aber durch das Bezugszeichen der jeweiligen Anlage zuzüglich des Index ".i", also durch 12.i, 14.i bzw. 18.i, angedeutet sind. Verschiedene Zonen der Oberflächenbehandlungsanlage 16 sind dagegen veranschaulicht und tragen eigene Bezugszeichen 20.i. Der Index ".i" soll darstellen, dass jeweils i=1 bis | Anlagenzonen vorhanden sein können, wobei I jeweils die Gesamtzahl der Anlagenzonen 12.i, 14.i, 18.i bzw. 20.i angibt, in denen die Fahrzeugkarosserien 10 auf unterschiedliche Art behandelt werden. Wenn nur eine einzige Zone vorhanden ist, ist I folglich jeweils gleich 1. Dies ist, wie es oben erwähnt wurde, beispielsweise bei der Endmontageanlage 18 der Fall, bei der es nur eine einzige Anlagenzone 18.1 gibt.

In der Rohbauanlage 12 werden Karrosserieteile aus Metall, beispielsweise in einem Presswerk gefertigte Blechteile, und/oder Karosserieteile aus Kunststoff zu den Fahrzeugkarosserien 10 zusammengefügt. Dies kann in unterschiedlichen Anlagenzonen der Rohbauanlage 12 durch unterschiedliche bekannte Techniken erfolgen. Beispielhaft seien Punktschweißen, Bahnschweißen, Druckfügen, Nieten und Kleben genannt. Hier werden folglich Arbeiten an einer Fahrzeugkarosserie 10 durchgeführt.

In der Korrosionsschutzanlage 14 erhalten die Fahrzeugkarosserien 10 eine Korrosionsschutzbehandlung. Die Korrosionsschutzanlage 14 umfasst einzelne Korrosionsschutz-Anlagenzonen und kann als an und für sich bekannte Anlage zur kataphoretischen Tauchlackierung ausgebildet sein. Beim vorliegenden Ausführungsbeispiel ist dies der Fall und in Figur 1 schematisch durch ein KTL-Tauchbad 14A angedeutet. Aber auch andere Korrosionsschutzbehandlungen können erfolgen, wie beispielsweise eine Applikation eines Korrosionsschutzes durch Spritzen bzw. Sprühen oder dergleichen.

In der Montageanlage 18 werden die Fahrzeugkarosserien 10 mit den notwendigen Komponenten und Bauteilen für ein fahrbereites Fahrzeug bestückt.

In den Anlagen 12, 14 und 18 und den zugehörigen Anlagenzonen 12.i, 14.i und 18.i sind Arbeitseinrichtungen oder Behandlungseinrichtungen vorhanden, die vorliegend nicht gesondert gezeigt oder mit Bezugszeichen versehen sind.

Die detaillierter gezeigte Oberflächenbehandlungsanlage 16 umfasst nun mehrere unterschiedliche Anlagenzonen 20.i, in denen die Fahrzeugkarosserien 10 auf unterschiedliche Art behandelt werden und die gegebenenfalls mehrere Behandlungseinrichtungen 20.i-j umfassen. Der Index ".i" soll darstellen, dass jeweils i=1 bis i=l Anlagenzonen 20.i vorhanden sein können, wobei I die Gesamtzahl der Anlagenzonen 20.i angibt. Der Index "-j" bei den Behandlungseinrichtungen 20.i-j soll darstellen, dass in einer bestimmten Anlagenzone 20.i eine Anzahl von j=1 bisj=m Behandlungseinrichtung 20.i-j vorhanden sein können; m gibt die Gesamtzahl der Behandlungseinrichtungen 20.i-j in einer bestimmten Anlagenzone 20.i.

Unterschiedliche Anlagenzonen 20.i tragen also jeweils das Bezugszeichen 20 mit einem fortlaufenden Zahlenindex ".i", d.h. 20.1, 20.2, 20.3, usw. Behandlungseinrichtungen, die von einer Anlagenzone 20.i umfasst sind, tragen das Bezugszeichen der Anlagenzone 20.i zuzüglich eines Zahlenindex "-j". Wenn es in einer Anlagenzone 20.i lediglich eine einzige Behandlungseinrichtung gibt, trägt diese daher das Bezugszeichen 20.i-1, bei mehreren Behandlungseinrichtungen in einer Anlagenzone 20.i gibt es entsprechend Behandlungseinrichtungen 20.i-1, 20.i-2, usw.

Die Fahrzeugkarosserien 10 werden in der Oberflächenbehandlungsanlage 16 in jeweils zwei Anlagenzonen 20.i, und 20.i₂ mit i₁ ≠ i₂ auf unterschiedliche Art behandelt. Bei der Abfolge der Behandlung können durchaus mehrere Anlagenzonen 20.i durchlaufen werden, in denen die Fahrzeugkarosserien 10 auf die gleiche Art behandelt werden. Die Grenze zwischen zwei benachbarten Anlagenzonen 20.i und 20.i+1 wird vorliegend dadurch definiert, dass sich die Art der Behandlung ändert. Im Sinne der oben erläuterten Einteilung kommt es also beim Übergang zwischen Applikationszonen, Temperierzonen und Funktionszonen zu einer Änderung der Art der Behandlung.

Beim vorliegenden Ausführungsbeispiel umfasst die Oberflächenbehandlungsanlage 16 eine Temperierzone 20.1, in welcher eine Temperiervorrichtung 22 angeordnet ist, die in Figur 1 von einer gestrichelten Linie umrahmt ist. Bei der Temperiervorrichtung 22 gibt es mehrere Temperierbereiche 24.k, in denen jeweils eine Temperatur T.k herrscht.

Der Index ".k" soll darstellen, dass jeweils k=1 bis k=n Temperierbereiche mit Temperaturen vorhanden sein können, wobei n die Gesamtzahl der Temperierbereiche 24.k der Temperierzone 20.1 bzw. der Temperiervorrichtung 22 angibt, in denen Temperaturen T.k herrschen. Die Temperaturen T.k in verschiedenen Temperierbereichen 24.k können unterschiedlich oder gleich sein.

Nochmals zusammengefasst gibt es bei Oberflächenbehandlungsanlage somit
eine Anzahl I Anlagenzonen 20.i mit i=1 bis i=l;
in jeder Anlagenzone 20.i eine Anzahl m Behandlungseinrichtungen 20.i-j mitj=1 bis j=m;
in der Anlagenzone 20.1 eine Anzahl n Temperierbereiche 24.k mit k=1 bis k=n, wobei die Anlagenzone 20.1 eine Temperierzone definiert und in jedem Temperierbereich 24.k eine Temperatur T.k herrscht.

Beim vorliegenden Ausführungsbeispiel ist in jedem Temperierbereich 24.k eine Behandlungseinrichtung 20.1-j in Form einer jeweiligen Temperiereinrichtung angeordnet, wobei k=j ist, d.h. der Zahlenindex ".k" der Temperierbereiche entspricht hier jeweils dem Zahlenindex "-j" der Behandlungseinrichtungen 20.1-j. Beim vorliegenden Ausführungsbeispiel gibt es in der Temperierzone 20.1 jeweils vier Behandlungseinrichtungen 20.1-1, 20.1-2, 20.1-3 und 20.1-4 sowie vier Temperierbereiche 24.1, 24.2, 24.3, 24.4, in denen Temperaturen T.1=100°C, T.2=140°C, T.3=160°C bzw. T.4=180°C herrschen; beim vorliegenden Ausführungsbeispiel gilt folglich für die Behandlungseinrichtungen 20.1-j in der Temperierzone 20.1 m=4 und n=4. Die Temperierzone 20.1 gemäß dem vorliegenden Ausführungsbeispiel lässt sich somit schematisch wie folgt auflisten:

### 20.1 Temperierzone

| | | |
|---|---|---|
| 24.1 | Temperierbereich mit T.1=100°C | |
| | 20.1-1 | Temperiereinrichtung T100 |
| 24.2 | Temperierbereich mit T.2=140°C | |
| | 20.1-2 | Temperiereinrichtung T140 |
| 24.3 | Temperierbereich mit T.3=160°C | |
| | 20.1-3 | Temperiereinrichtung T160 |
| 24.4 | Temperierbereich mit T.4=180°C | |
| | 20.1-4 | Temperiereinrichtung T180 mit Abdunsteinrichtung |

Die Temperaturen von 100°C, 140°C, 160°C bzw. 180°C in den Temperiereinrichtungen 20.1-1 bis 20.2-4 spiegeln sich in den Bezeichnungen T100, T140, T160 bzw. T180. In den einzelnen Temperiereinrichtungen 20.1-j können auch andere Temperaturen herrschen; ebenso können mehr oder weniger Temperiereinrichtungen 20.1-j vorhanden sein. Die jeweilige Anzahl und die zugehörigen Temperaturen hängen von dem Gesamtprozess ab, der in der Oberflächenbehandlungsanlage 16 durchlaufen werden soll. Die Temperiereinrichtung 20.1-4 umfasst eine Abdunsteinrichtung; diese kann bei einer nicht eigens gezeigten Abwandlung auch als separate Behandlungseinrichtung 20.1-j vorgesehen sein. Allgemein kann für alle Temperiereinrichtungen 20.1-j jeweils eine Abdunsteinrichtung vorgesehen sein, die jeweils in eine zugehörige Temperiereinrichtung 20.1-j integriert oder separat ausgebildet sein kann.

Abgesehen von den Temperiereinrichtungen 20.1-j umfasst die Oberflächenbehandlungsanlage 16 außerdem exemplarisch folgende weitere Anlagenzonen 20.i mit zugehörigen Behandlungseinrichtungen 20.i-j.

| | | |
|---|---|---|
| 20.2 | Funktionszone | |
| | 20.2-1 | Audit/Schleif-Einrichtung |
| | 20.2-2 | Speichereinrichtung |
| 20.3 | erste Applikationszone | |
| | 20.3-1 | Unterbodenschutz-Applikationseinrichtung |
| | 20.3-2 | Nahtabdichten-Applikationseinrichtung |
| 20.4 | zweite Applikationszone | |
| | 20.4-1 | Füller-Applikationseinrichtung |
| 20.5 | dritte Applikationszone | |
| | 20.5-1 | Basislack(BC)-Lackiereinrichtung |
| 20.6 | vierte Applikationszone | |
| | 20.6-1 | Decklack(CC)-Lackiereinrichtung |
| 20.7 | Funktionszone | |
| | 20.7-1 | Speicher |

Die beiden Behandlungseinrichtungen 20.3-1 und 20.3-2 der ersten Applikationszone 20.3 sind in Figur 1 nicht gesondert gezeigt.

Die Fahrzeugkarosserien 10 werden mit einem Fördersystem 26 durch die Oberflächenbehandlungsanlage 16 gefördert.

Zwischen dem Tauchbad 14A der Korrosionsschutzanlage 14 und der Oberflächenbehandlungsanlage befindet sich eine Übergabeeinrichtung 28, mittels welcher eine zu behandelnde Fahrzeugkarosserie 10 von dem Fördersystem der Korrosionsschutzanlage 14 an das Fördersystem 26 der Oberflächenbehandlungsanlage 16 übergeben werden kann. In entsprechender Weise befindet sich zwischen der Oberflächenbehandlungsanlage 16 und der Endmontageanlage 18 eine Übergabeeinrichtung 30, mittels welcher eine behandelte Fahrzeugkarosserie 10 von dem Fördersystem 26 der Oberflächenbehandlungsanlage 16 an das Fördersystem der Endmontageanlage 18 übergeben werden kann.

Wenn das Fördersystem in der Korrosionsschutzanlage 14 und/oder der Endmontageanlage 18 dasselbe Fördersystem 26 ist wie in der Oberflächenbehandlungsanlage 16, ist die Übergabeeinrichtungen 24 und/oder die Übergabeeinrichtung 26 nicht vorhanden. Wenn in der Rohbauanlage 12 nicht dasselbe Fördersystem genutzt wird wie in der Korrosionsschutzanlage 14, wie es zum Beispiel der Fall ist, wenn ein KTL-Tauchbad 14A vorhanden ist, ist zwischen diesen beiden Anlagen eine hier nicht eigens gezeigte Übergabeeinrichtung vorhanden.

Das Transportsystem 26 umfasst eine Vielzahl von Transportwagen 32, auf denen die Fahrzeugkarosserien 10 transportiert werden und welche auf einem Schienensystem 34, wobei in Figur 1 nur ein einziger Transportwagen 32 sein Bezugszeichen trägt. Das Schienensystem 34 umfasst eine Tragschiene 36, auf welcher die Transportwagen 32 verfahren und welche in an und für sich bekannter Weise als I-Profil ausgebildet und am Boden verankert ist. Die somit bodengebundene Tragschiene 36 ist einspurig. Alternativ kann auch ein mehrspuriges, insbesondere zweispuriges Schienensystem 34 vorhanden sein. Bei einer Abwandlung kann das Fördersystem 26 auch als Hängebahnsystem ausgebildet sein, wie es an und für sich bekannt ist. Bei einer weiteren Abwandlung können Transportwagen auch freifahrend ausgebildet sein. Wenn nachfolgend Begriffe wie "Strang", "Abschnitt" oder dergleichen verwendet werden, sind diese bei solchen freifahrenden Transportwagen als jeweilige Wegstrecken zu verstehen.

Das Fördersystem 26 bzw. dessen Schienensystem 34 ist so ausgebildet, dass die Fahrzeugkarosserien 10 abhängig von dem durchzuführenden Temperierprozess wahlweise durch alle n Temperierbereiche 24.k oder durch eine Anzahl N der Temperierbereiche 24.k gefördert werden kann, wobei die Anzahl N kleiner ist als die Anzahl n der vorhandenen Temperierbereiche 24.k, d.h. also wobei N<n ist.

Hierzu sind die Temperierbereiche 24.k und die zugehörigen Temperiereinrichtungen 20.1-j entlang eines Temperierstranges 38 des Fördersystem 26 angeordnet, welcher sich von einer Startstelle 38a vor dem Eingang zur ersten Temperiereinrichtung 20.1-1 und einer Endstelle 38b am Ausgang der letzten Temperiereinrichtung 20.1-4. Beim vorliegenden Ausführungsbeispiel ist dieser Temperierstrang 38 ein Abschnitt der Tragschiene 36. Der Temperierstrang 38 führt zum einen durch alle Temperierbereiche 24.k und definiert für jeden vorhandenen Temperierbereich 24.k einen jeweiligen Zuführabschnitt 40. Bei den Temperiereinrichtungen 20.1-j mit j>1 kommt der zugehörige Zuführabschnitt 40 somit stets von einer vorhergehenden Temperiereinrichtung 20.1-(j-1), bei der ersten Temperiereinrichtung 20.1-1 auf dem Temperierstrang 38 ist dies nicht der Fall. Zwei auf dem Temperierstrang 38 benachbart angeordnete Temperiereinrichtungen 20.1-j bzw. Temperierbereiche 24.k sind somit durch einen jeweiligen Zuführabschnitt 40 fördertechnisch miteinander verbunden.

Erfindungsgemäß folgen die Temperierbereiche 24.k und somit die zugehörigen Temperiereinrichtungen 20.1-j entlang des Temperierstranges 38 folglich unmittelbar aufeinanderfolgend.

Wenigstens einer der Zuführabschnitte 40 des Temperierstranges 38 ist über wenigstens eine Überführungseinrichtung 42 mit einem Bypassstrang 44 des Fördersystems 26, beim vorliegenden Ausführungsbeispiel somit des Schienensystems 34, verbunden, welcher an zumindest einer Temperiereinrichtung 20.1-j vorbei führt. Der Bypassstrang 44 erstreckt sich zwischen einem ersten Ende 44a und einem zweiten Ende 44b, wobei das erste Ende 44a mit der Startstelle 38a des Temperierstranges 38 zusammenfällt.

Beim vorliegenden Ausführungsbeispiel sind alle Zuführabschnitte 40 des Temperierstranges 38 über eine jeweilige Überführungseinrichtung 42 mit dem Bypassstrang 44 verbunden. Auf diese Weise kann ein Transportwagen 32 hinter jeder Temperiereinrichtung 20.1-j aus der Abfolge der Temperierbereiche 24.k herausgefahren und zu einer anderen Station gefahren werden.

Bei den Zuführsträngen 40 zu den Temperiereinrichtungen 20.1-j mit j>1 sind die Überführungseinrichtungen 42 bidirektional. Auf diese Weise kann ein Transportwagen 32 einerseits von einem Zuführabschnitt 40 auf den Bypassstrang 44 und andererseits von dem Bypassstrang 44 auf einen Zuführabschnitt 40 überführt werden.

Beim vorliegenden Ausführungsbeispiel sind die Überführungseinrichtungen 42 zwischen zwei Temperiereinrichtungen 20.1-j schematisch durch eine jeweilige Weicheneinrichtung 46 mit jeweils zwei Verbindungsschienen 46a und 46b veranschaulicht; die jeweiligen Transportrichtungen ergeben sich auch den in den Figuren 1 und 2 gezeigten Pfeilen. Die Weicheneinrichtungen 46 umfassen an den gezeigten Verzweigungen jeweils eine Weiche, wie sie an und für sich bekannt ist.

Die Verbindungsschienen 46a, 46b sind nur bei der Weicheneinrichtung 46 zwischen den Temperiereinrichtungen 20.1-1 und 20.1-2 gekennzeichnet. Bei der Weicheneinrichtung 46 des Zuführabschnitts 40 der Temperiereinrichtung 20.1-1 verzweigt das Schienensystem 34 in den Zuführabschnitt 40 und den Bypassstrang 44. Alternativ zu den Weicheneinrichtungen 46 kommen auch Querverschiebeeinrichtungen oder dergleichen in Betracht, wie sie an und für sich bekannt sind. Wenn die Transportwagen 32 freifahrend ausgebildet sind, wie es oben angesprochen ist, sind solche Überführungseinrichtungen 42 durch Abzweigungen der Wegstrecke ausgebildet.

Anstelle der zwei Verbindungsschienen 46a, 46b kann auch nur eine einzige Verbindungsschiene vorgesehen sein, über welche die Transportwagen 32 in beiden Richtungen fahren können, sofern nicht konstruktive Vorgaben, wie beispielsweise die Energieversorgung durch seitlich an der Schiene verlaufende Stromschienen, dem entgegenstehen.

Beim vorliegenden Ausführungsbeispiel sollen an allen Verbindungsstellen zwischen zwei oder mehr Schienensträngen zugehörige Weichen vorhanden sein, wie sie an und für sich bekannt sind, die jedoch nicht eigens mit einem Bezugszeichen versehen sind.

Die Weicheneinrichtung 46 ist nun so eingerichtet, dass die Transportwagen 32 von dem Temperierstrang 38 über die ersten Verbindungsschiene 46a nur in einer Richtung auf den Bypassstrang 44 auffahren können und auch nur aus dieser Richtung kommend von dem Bypassstrang 44 über die zweiten Verbindungsschiene 46b auf den Temperierstrang 38 auffahren können.

Bei einer in den Figuren 1 und 2 angedeuteten Abwandlung, bei der das Transportsystem und die Transportwagen entsprechend angepasst sind, ist die Weicheneinrichtung 46 so eingerichtet, dass die Transportwagen 32 von dem Temperierstrang 38 in beide Richtungen auf den Bypassstrang 44 auffahren können bzw. aus beiden Richtungen von dem Bypassstrang 44 kommend auf den Temperierstrang 38 auffahren können. Dies ist durch gestrichelt gezeigte Kurvenabschnitte 48 angedeutet ist, von den denen nur einer an der Verbindungsschiene 46a zwischen den Temperiereinrichtungen 20.1-1 und 20.1-2 ein Bezugszeichen trägt. Die soll veranschaulichen, dass ein Transportwagen 32 auch beispielsweise auf direktem Weg über den Bypassstrang 44 zu einer Temperiereinrichtung 20.1-j zurückgeführt werden kann. Wenn eine Fahrzeugkarosserie 10 zum Beispiel den Temperierbereich 24.3 mit der Temperatur T.3=160°C zweimal hintereinander durchfahren soll, kann der Transportwagen 32 mit dieser Fahrzeugkarosserie 10 auf den Bypassstrang 44 überführt und dort in entgegengesetzte Richtung an der Temperiereinrichtung 20.1-3 vorbei zurückgeführt, dann auf deren Zuführabschnitt 40 überführt und wieder durch die Temperiereinrichtung 20.1-3 hindurch gefördert werden.

Für die konkrete Ausbildung der eigentlichen Weichen an den Verbindungsstellen von zwei oder mehreren Schienensträngen kommen alle aus dem Stand der Technik bekannten Techniken in Betracht.

Das Schienensystem 34 umfasst nun ferner einen Behandlungsstrang 50, welcher sich zwischen einem Anfang 50a und einem Ende 50b erstreckt. Dabei ist der Anfang 50a des Behandlungsstranges 50 mit der Endstelle 38b des Temperierstranges 38 verbunden; außerdem mündet das Ende 50b des Behandlungsstranges 50 in die Startstelle 38a des Temperierstranges 38 und das erste Ende 44a des Bypassstranges 44. Das zweite Ende 44b des Bypassstranges 44 ist mit dem Behandlungsstrang 50 verbunden, fällt dortjedoch nicht mit der Endstelle 38b des Temperierstranges 38 bzw. dem Anfang 50a des Behandlungsstranges 50 zusammen.

Entlang des Behandlungsstranges 50 sind nun die einzelnen Behandlungseinrichtungen 20.i-j in jeweiligen Nebensträngen 52 angeordnet, die von dem Bandlungsstrang 50 abgehen, zu und durch die jeweilige Behandlungseinrichtung 20.i-j führt und hiernach wieder in den Behandlungsstrang 50 mündet. Lediglich der Speicher 20.7-1 befindet sich an einem Ausgangsstrang 54, der vom Ende 50b des Behandlungsstranges 50 zur Übergabeeinrichtung 28 führt.

Auf diese Weise kann eine Fahrzeugkarosserie 10 zu einer bestimmte Behandlungseinrichtung 20.i-j gefahren werden, wo sie eine entsprechende Behandlung erhält, oder eine Fahrzeugkarosserie 10 kann an einer bestimmten Behandlungseinrichtung 20.i-j vorbei gefahren werden, indem der Transportwagen 32 auf dem Behandlungsstrang 50 bleibt.

Der Behandlungsstrang 50 ist außerdem über eine jeweilige Überführungseinrichtung 56 mit den Zuführabschnitten 40 verbunden, die zwischen zwei auf dem Temperierstrang 38 benachbarten Temperiereinrichtungen 20.1-j angeordnet sind; es gibt folglich drei solche Überführungseinrichtungen 56.

Die Überführungseinrichtungen 56 sind wieder durch jeweils eine Weicheneinrichtung 58 mit zwei Verbindungsschienen 58a, 58b veranschaulicht. Die Verbindungsschienen 58a, 58b sind nur bei der Weicheneinrichtung 58 am Zuführabschnitt 40 zwischen den Temperiereinrichtungen 20.1-1 und 20.1-2 gekennzeichnet. Die Weicheneinrichtungen 58 sind derart eingerichtet, dass die Transportwagen 32 von dem Temperierstrang 38 über den ersten Verbindungsschiene 58a nur in einer Richtung auf den Behandlungsstrang 50 auffahren können und auch nur aus dieser Richtung kommend von dem Behandlungsstrang 50 über den zweiten Verbindungsschiene 58b auf den Temperierstrang 38 auffahren können. Auch hier sind Abwandlungen möglich, die es ermöglichen, dass ein Transportwagen 32 in beide Richtungen auf den Behandlungsstrang 50 auffährt oder aus beiden Richtungen kommend vom Behandlungsstrang 50 auf einen jeweiligen Zuführabschnitt 40 auffahren kann.

Dadurch, dass die Transportwagen 32 von den Zuführabschnitten 40 direkt auf den Behandlungsstrang 50 auffahren können, kann ein längerer Weg über den Bypassstrang 44 gespart werden, sofern dies mit dem weiteren Behandlungsablauf und den übrigen auf dem Schienensystem 34 befindlichen Transportwagen 32 in Einklang gebracht werden kann.

Das Schienensystem 34 umfasst außerdem noch einen Eingangsstrang 60, der von der Übergabeeinrichtung 28 zur Startstelle 38a des Temperierstranges 38 führt, da Fahrzeugkarosserien, die aus der Korrosionsschutzanlage 14 und dem KTL-Tauchbad 14A kommen, in einem nächsten Behandlungsschritt temperiert, d.h. getrocknet werden müssen und so der Fahrweg zur Temperiervorrichtung 22 kurz gehalten ist.

Die Temperiervorrichtung 22 weist zwischen den Temperiereinrichtungen 20.i-j freie Bereiche auf. In diesem Fall umfasst jede Temperiereinrichtung 20.i-j gegebenenfalls eine eigene Eingangsschleuse und eine eigene Ausgangsschleuse. Um dies zu vermeiden, können die Bereiche zwischen zwei Temperiereinrichtungen 20.i-j auch durch einen Verbindungstunnel 62 miteinander verbunden sein, welche dann entsprechende Schleusen umfasst. In diesem Fall muss zumindest dann keine Schleuse durchfahren werden, wenn eine Fahrzeugkarosserie 10 unmittelbar von einer Temperiereinrichtung 20.i-j zur nächsten Temperiereinrichtung 20.i-(j+1) gefördert wird. Solche als Alternative möglichen Verbindungstunnel 62 sind durch gepunktete Wellenlinien veranschaulicht.

Insgesamt sind die Temperiervorrichtung 22 und das Fördersystem 26 bei dem hier erläuterten Ausführungsbeispiel so aufeinander abgestimmt, dass die Fahrzeugkarosserien 10 in beliebiger Abfolge durch zwei, mehrere oder alle Temperierbereiche 24.k bzw. die dortigen Temperiereinrichtungen 20.1-j gefördert werden können. Dabei können die Fahrzeugkarosserien 10 gegebenenfalls auch mehrfach hintereinander durch ein und dieselbe Temperiereinrichtung 20.1-j gefördert werden. Wenn die Fahrzeugkarosserien 10 ohne weitere Maßnahmen auf dem Weg vom Ausgang einer Temperiereinrichtung 20.i-j zurück zu deren Eingang zu stark abkühlen sollte, kann beispielsweise ein Rückführweg vorgesehen sein, der durch einen wärmeisolierten Rückführtunnel führt. Alternativ könnte auch eine Rückführ- oder Kreisschleife innerhalb der Temperiereinrichtung 20.1-j vorgesehen sein, ohne dass die Fahrzeugkarosserie 10 die Temperiereinrichtung 20.1-j verlässt.

Bei dieser Ausbildung der Temperiervorrichtung 22 können die unterschiedlichen Temperierbereiche 20.k selektiv von einem Transportwagen 32 angefahren werden und können die Transportwagen 32 selektiv nach Erreichen einer bestimmten Zieltemperatur von der Temperiervorrichtung 22 weggeführt werden. Die Temperiervorrichtung 22 kann auch zum Abkühlen einer Fahrzeugkarosserie 10 genutzt werden, indem diese in umgekehrter Reihenfolge von höheren zu niedrigeren Temperaturen durch die Temperiereinrichtungen 20.i-j gefahren werden. Dabei können die Fahrzeugkarosserien 10 auch entgegen der in den Figuren 1 und 2 angezeigten Transportrichtung durch die Temperierbereiche 24.k gefördert werden, so dass sie auch bei einer solchen Abkühlreihenfolge unmittelbar von einem Temperierbereich 20.k₁ zum nächsten Temperierbereich 20.k₂ mit k₁ > k₂ gelangen, ohne dass die Fahrzeugkarosserien 10 beim Fördern vom Ausgang einer Temperiereinrichtung 20.1-j₁ zum Eingang der nächsten Temperiereinrichtung 20.1-j₂ mit j₁ > j₂ außen an den beiden Temperiereinrichtungen 20.1-j₁ und 20.1-j₂ vorbeigeführt werden müssen. Zudem können die einzelnen Temperierbereiche 20.k zum selektiven Vorheizen für einen Prozess genutzt werden, der höhere Temperaturen benötigt.

Darüber hinaus sind bei der Oberflächenbehandlungsanlage 16 alle vorhandenen Anlagenzonen 20.i und das Fördersystem 26 derart aufeinander abgestimmt, dass die Fahrzeugkarosserien 10 in beliebiger Abfolge durch eine, mehrere oder alle Anlagenzonen 20.i und, sofern vorhanden, in beliebiger Abfolge durch eine, mehrere oder alle der Behandlungseinrichtungen 20.i-j einer, mehrerer oder aller Anlagenzonen 20.i gefördert werden können. Somit kann nicht nur die Abfolge der Behandlungseinrichtungen 20.i-j in der Temperierzone 20.1 frei gewählt werden, sondern auch die Abfolge und/oder Wiederholungen der übrigen Behandlungseinrichtungen 20.i-j in den weiteren Anlagenzonen 20.i.

In Figur 2 sind der Übersichtlichkeit halber nur die Behandlungseinrichtungen 20.i-j und die nachfolgend erwähnten Bezugszeichen angegeben. Figur 2 veranschaulicht nun den Durchlauf einer Fahrzeugkarosserie 10 durch die Oberflächenbehandlungsanlage 16, welche von der Übergabeeinrichtung 28 aus dem KTL-Tauchbad 14A kommt.

Die Fahrzeugkarosserie 10 fährt zunächst auf einem ersten Pfad 64, der durch eine durchgezogenen Linie hervorgehoben ist, auf dem Transportwagen 32 durch alle vier Temperiereinrichtungen 20.1-1, 20.1-2, 20.1-3 und 20.1-4 in der Temperierzone 20.1, so dass die Fahrzeugkarosserie 10 sukzessive auf 180°C aufgeheizt wird. Hiernach gelangt die Fahrzeugkarosserie 10 zur Audit/Schleif-Einrichtung 20.2-1 in der Funktionszone 20.2 und von dort weiter zur Unterbodenschutz-Applikationseinrichtung 20.3-1 und zur Nahtabdichten-Applikationseinrichtung 20.3-1 in der ersten Applikationszone 20.3.

Auf einem zweiten Pfad 66, der durch eine gepunktete Linie hervorgehoben ist, fährt die Fahrzeugkarosserie 10 dann auf dem Transportwagen 32 durch die ersten drei Temperiereinrichtungen 20.1-1, 20.1-2 und 20.1-3, wonach die Fahrzeugkarosserie 10 sukzessive auf 160°C aufgeheizt ist. Dann gelangt die Fahrzeugkarosserie 10 zur Füller-Applikationseinrichtung 20.4-1 in der zweiten Applikationszone 20.4.

Auf einem dritten Pfad 68, der durch eine strichpunktierte Linie hervorgehoben ist, fährt die Fahrzeugkarosserie 10 auf dem Transportwagen 32 durch die ersten beiden Temperiereinrichtungen 20.1-1 und 20.1-2 und ist dann auf 140°C aufgeheizt, was zum Trocknen des Füllers ausreicht. Hiernach wird die Fahrzeugkarosserie 10 nochmals in der Funktionszone 20.2 und der dortigen Audit/Schleifeinrichtung 20.2-1 untersucht und, sofern ihr Zustand einwandfrei ist, zur Basislack(BC)-Lackiereinrichtung 20.5-1 in der dritten Applikationszone 20.5 gefördert.

Auf einem vierten Pfad 70, der durch eine strichdoppeltpunktierte Linie hervorgehoben ist, wird die Fahrzeugkarosserie 10 nochmal bei 140°C getrocknet, indem sie durch die beiden ersten Temperiereinrichtungen 20.1-1 und 20.1-2 gefördert wird, um dann in der Decklack(CC)-Lackiereinrichtung 20.6-1 in der vierten Applikationszone 20.6 mit einem Decklack versehen zu werden.

Auf einem fünften Pfad 72, der durch eine gestrichelte Linie hervorgehoben ist, wird die Fahrzeugkarosserie 10 dann erneut durch die ersten beiden Temperiereinrichtungen 20.1-1 und 20.1.-2 gefördert, so dass der Decklack bei 140°C getrocknet wird. Danach gelangt die nun fertig beschichtete Fahrzeugkarosserie 10 zu der Übergabeeinrichtung 30 und von dort zur Montageanlage 18, wo das Fahrzeug fertiggestellt wird.

In Fällen, bei welchen die Fahrzeugkarosserien 10 nicht zunächst den Temperaturbereich 24.1 mit T.1 =100°C durchlaufen müssen, können die Fahrzeugkarosserien 10 auch über einen Bypass-Pfad 74, der durch eine im Vergleich zu dem Pfad 1 dickere durchgezogene Linie veranschaulicht ist, stets an der Temperiereinrichtung 20.1-1 vorbeigeführt werden, so dass alle oder einige der Temperierprozesse mit einer Starttemperatur von 140°C beginnen können. Alternativ kann bei der Temperiervorrichtung auf einen Temperierbereich 24.k mit einer Temperatur von 100°C verzichtet werden; die Temperiervorrichtung 22 umfasst dann nur drei Temperiereinrichtungen 20.1-1, 20.1-2, 20.1-3 mit Temperaturbereichen 24.1, 24.2, 24.3 und dortigen Temperaturen T.1 =140°C, T.2=160°C bzw. T.3=180°C.

Nachstehend wird nun das Fördersystem 26 und ein Grundkonzept für Behandlungseinrichtungen 20.i-j, insbesondere für die Temperiereinrichtungen 20.1-1, 20.1-2, 20.1-3 und 20.1-4 der Oberflächenbehandlungsanlage 16, aber auch für Arbeitseinrichtungen oder Behandlungseinrichtung 20.i-j mit i>1 in den Anlagen 12, 14 und 18 anhand der Figuren 3 bis 5 erläutert.

Figur 3 zeigt zunächst einen einzelnen Transportwagen 32 auf dem Schienensystem 34. Der Transportwagen 28 umfasst eine Befestigungseinrichtung 76, an welcher eine Fahrzeugkarosserie 10 befestigt werden kann. Hierfür umfasst die Befestigungseinrichtung 76 ein Tragprofil 78 mit in den Figuren nicht zu erkennenden Lagerbolzen, welche in an und für sich bekannter Art und Weise mit Gegenelementen an der Fahrzeugkarosserie 10 zusammenarbeiten, so dass die Fahrzeugkarosserie 10 an der Befestigungseinrichtung 76 fixiert werden kann. Die Befestigungseinrichtung 76 kann auch mehrere Sätze von solchen Lagerbolzen aufweisen, die an unterschiedliche Fahrzeugkarosserien 10 mit verschiedenen Abmessungen und Ausgestaltungen angepasst sind, so dass die Befestigungseinrichtung 76 flexibel für unterschiedliche Fahrzeugkarosserietypen genutzt werden kann.

Die Befestigungseinrichtung 76 nimmt eine Fahrzeugkarosserie 10 somit unmittelbar auf, ohne dass die Fahrzeugkarosserie 10 auf einem Werkstückträger, wie beispielsweise einem an und für sich bekannten Skid, befestigt ist.

Bei kleineren anderen Gegenständen kann die Befestigungseinrichtung einen Werkstückträger oder Tragkorb umfassen, welche mehrere Gegenstände aufnehmen können. Beim Automobilbau können solche Gegenstände zum Beispiel Stoßfänger, Seitenspiegel oder sonstige Anbauteile sein.

Der Transportwagen 32 umfasst ein Transportwagen-Fahrwerk 80, welches auf der Tragschiene 36 abläuft und die Befestigungseinrichtung 76 lagert. Beim vorliegenden Ausführungsbeispiel umfasst das Transportwagen-Fahrwerk 80 eine in Transportrichtung vorauseilende Vorläufereinheit 82 und eine in Transportrichtung nacheilende Nachläufereinheit 84. Die Transportrichtung ist in den Figuren 3 und 4 nochmals durch jeweils einen Pfeil ohne Bezugszeichen gekennzeichnet.

Die Vorläufereinheit 82 und die Nachläufereinheit 84, d.h. allgemein das Transportwagen-Fahrwerk 80, sind über eine Verbindungseinrichtung 86 mit der Befestigungseinrichtung 76 gekoppelt. Die Kopplung ist derart eingerichtet, dass der Transportwagen 32 in der Lage ist, auch Kurvenabschnitte der Tragschiene 36 zu durchfahren. Beim vorliegenden Ausführungsbeispiel umfasst die Verbindungseinrichtung 86 zwei vertikale Gelenkstreben 88 bzw. 90, welche die Vorläufereinheit 82 und die Nachläufereinheit 84 mit der Befestigungseinrichtung 76 koppeln. Die Gelenkstreben 88, 90 ermöglichen es durch ein Gelenk 88a bzw. 90a, dass die Befestigungseinrichtung 76 um eine vertikale Drehachse gegenüber der Vorläufereinheit 82 und der Nachläufereinheit 84 verschwenken kann.

Darüber hinaus ist der Transportwagen 32 so eingerichtet, dass er auch geneigte Abschnitte, d.h. in Transportrichtung gesehen Steigungsabschnitte oder Gefälleabschnitte, der Tragschiene 36 überwinden kann. Hierzu ist das Tragprofil 78 noch um jeweils eine horizontale Schwenkachse verschwenkbar an den Gelenkstreben 88, 90 befestigt. Hierdurch ist es möglich, dass die Temperierbereiche 24.k und auch die Behandlungseinrichtungen 20.i-j auf unterschiedlichen Höhenniveaus angeordnet sind. Insbesondere in den Temperierbereichen 24.k können die Transportwagen 32 in einer Spirale geführt werden. Gegebenenfalls können die Temperierbereiche 24.k übereinander angeordnet sein und eine Art Temperierturm ausbilden.

Die Vorläufereinheit 82 und die Nachläufereinheit 84 sind weitgehend baugleich, wobei einzelne Bauteile und Komponenten auf einen geraden Abschnitt der Tragschiene 36 bezogen auf eine Ebene senkrecht zur Transportrichtung gespiegelt positioniert sind. Einander entsprechende Bauteile und Komponenten der Vorläufereinheit 82 und der Nachläufereinheit 84 tragen dieselben Bezugszeichen mit den Indizes ".1" bzw. ".2". Die Vorläufereinheit 82 bildet eine Fahrwerkeinheit 92.1 und die Nachläufereinheit 94 bildet eine Fahrwerkeinheit 92.2 des Transportwagen-Fahrwerks 88 des Transportwagens 32.

Nachfolgend wird nun die Vorläufereinheit 82 erläutert; das hierzu Gesagte gilt sinngemäß entsprechend für die Nachläufereinheit 84. Die Vorläufereinheit 82 lagert eine Antriebsrolle 94.1, welche auf einer Antriebslauffläche 96 der Tragschiene 36 abrollt und mittels eines Antriebsmotors 98.1 angetrieben wird, der von der Vorläufereinheit 82 mitgeführt wird. Beim vorliegenden Ausführungsbeispiel ist die Antriebslauffläche 96 der Tragschiene 36 die Fläche auf der Oberseite des I-Profils und verläuft entsprechend in horizontalen Abschnitten der Tragschiene 36 ebenfalls horizontal. Bei nicht eigens gezeigten Abwandlungen kann die Antriebslauffläche 96 auch zum Beispiel vertikal verlaufen; in diesem Fall drückt die Antriebsrolle 94.1 als Reibrad seitlich gegen die Tragschiene 36 an.

Allgemein ausgedrückt führen die Transportwagen 32 jeweils ein eigenes Antriebssystem mit sich, so dass die Transportwagen 32 unabhängig voneinander angetrieben und verfahren werden können. Bei dem vorliegenden Ausführungsbeispiel ist das eigene Antriebssystem durch die Antriebrollen 94.1, 94.2 die zugehörigen Antriebsmotoren 98.1, 98.2 ausgebildet.

Zusätzlich zu oder anstelle von den hier erläuterten Transportwagen 32 mit eigenem Antriebssystem können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 32 können entsprechend auch unabhängig von anderen Antriebseinrichtungen angetrieben und verfahren werden.

Um zu verhindern, dass die Vorläufereinheit 82 in Transportrichtung, d.h. um eine horizontale Achse senkrecht zur Transportrichtung verkippt, lagert die Fahrwerkeinheit 92.1 der Vorläufereinheit 82 in einem Abstand von der Antriebsrolle 94.1 eine passive Stützrolle 100.1, welche ebenfalls auf der Antriebslauffläche 96 der Tragschiene 36 abrollt. Außerdem lagert die Fahrwerkeinheit 92.1 der Vorläufereinheit 82 mehrere seitliche Führungsrollen 102.1, von denen nur zwei ein Bezugszeichen tragen und welche von beiden Seiten an der Tragschiene 36 anliegen und so in an und für sich bekannter Art und Weise ein Verkippen der Vorläufereinheit 82 zur Seite verhindern.

Beim vorliegenden Ausführungsbeispiel umfasst die Vorläufereinheit 82 einen Antriebsrahmen 104.1, welcher die Antriebsrolle 94.1 mit dem Antriebsmotor 98.1 und zu beiden Seiten der Tragschiene 36 je vier Führungsrollen 102.1 lagert. Der Antriebsrahmen 104.1 ist über eine Stütztraverse 106.1 gelenkig mit einen Stützrahmen 108.1 verbunden, welcher seinerseits die Stützrolle 100.1 und ebenfalls zu beiden Seiten der Tragschiene 36 je vier Führungsrollen 102.1 lagert. Die gelenkige Verbindung des Antriebsrahmens 104.1 mit dem Stützrahmen 108.1 erfolgt über nicht eigens mit einem Bezugszeichen versehene Kupplungsgelenke, die eine Durchfahrt von Kurvenabschnitten der Tragschiene 36 erlauben.

Beim vorliegenden Ausführungsbeispiel lagern sowohl die Vorläufereinheit 82 als auch die Nachläufereinheit 84 jeweils eine Antriebsrolle 94.1 bzw. 94.2 sowie den jeweils zugehörigen Antriebsmotor 98.1, 98.2. Bei einer nicht eigens gezeigten Abwandlung kann es ausreichen, wenn nur an der Vorläufereinheit 82 eine Antriebsrolle 94.1 mit Antriebsmotor 98.1 vorhanden ist. Das Transportwagen-Fahrwerk 80 des Transportwagens 32jedenfalls lagert wenigstens eine Antriebsrolle und führt deren Antriebsmotor mit sich.

Für die Energieversorgung der Antriebsmotoren 98.1 und 98.2 der Vorläufereinheit 82 und der Nachläufereinheit 84 führt der Transportwagen 32 eine autarke Energieversorgungseinrichtung 110 mit sich. Darunter ist eine Energieversorgungseinrichtung zu verstehen, welche die Energieversorgung der Antriebsmotoren 98.1, 98.2 im Fahrbetrieb, d.h. während der Bewegung des Transportwagens 32, unabhängig von externen Energiequellen sicherstellt.

Beim vorliegenden Ausführungsbeispiel ist die Energieversorgungseinrichtung 110 mit wiederaufladbaren Energiespeichern 112 mit wenigstens einer Energiespeichereinheit 114 konzipiert. An jeder Fahrwerkeinheit 92.1, 92.2 ist dabei eine Energiespeichereinheit 114 für den jeweiligen Antriebsmotor 98.1, 98.2 vorhanden. Eine wiederaufladbare Energiespeichereinheit 114 für elektrische Energie kann in Form eines Akkumulators oder eines Kondensators bereitgestellt sein. Bei einer nicht eigens gezeigten Abwandlung kann auch nur eine einzige Energiespeichereinheit für beide Antriebsmotoren 98.1, 98.2 vorgesehen sein. Alternativ können auch Druckgasspeicher als Energiequelle für Druckgasantriebe vorhanden sein.

Grundsätzlich können die Transportwagen 32 auch mit Hilfe an und für sich bekannter Versorgungssysteme mit Energie versorgt werden. Hierzu zählt insbesondere eine Ausbildung, bei der die Tragschiene 36 eine stromführende Schleifleitung umfasst, wobei die Transportwagen 32 dann entsprechende Abnahmemittel mit sich führen, welche die Schleifleitung leitend berühren. Auch bekannte berührungslose Energieübertragungseinrichtungen können eingesetzt werden.

Die Nachläufereinheit 84 trägt außerdem eine Steuereinrichtung 116, mittels welcher die Antriebsmotoren 98.1, 98.2 angesteuert und synchronisiert werden. Die Steuereinrichtung 116 kommuniziert mit einer nicht eigens gezeigten Zentralsteuerung der Oberflächenbehandlungsanlage 16 bzw. den Anlagen 12, 14, 16 und 18 oder einer übergeordneten Steuerung der Gesamtanlage 8.

Figur 4 veranschaulicht das Grundkonzept einer Arbeitseinrichtung oder Behandlungseinrichtung in den Anlagen 12, 14, 16, 18 und zeigt insbesondere eine Behandlungseinrichtung 20.i-j, wie sie in der Temperierzone 20.1, in der Funktionszone 20.2 oder in einer der Applikationszonen 20.3, 20.4, 20.5, oder 20.6 vorgesehen sein kann, anhand einer Behandlungseinrichtung 118. Die Behandlungseinrichtung 118 steht somit exemplarisch für die beim vorliegenden Ausführungsbeispiel vorhandenen Behandlungseinrichtungen 20.i-j und die nicht eigens gezeigten Arbeits- und Behandlungseinrichtungen der übrigen Anlagen 12, 14 und 18, insbesondere für die Temperiereinrichtungen 20.1-j in der Temperierzone 20.1.

Die jeweiligen, nachfolgend erläuterten Komponenten der Behandlungseinrichtung 118 spiegeln lediglich die Grundfunktionalität der Komponente wieder. So ist zum Beispiel das Gehäuse eines Trockners in bekannter Art und Weise anders ausgebildet, als beispielsweise das Gehäuse einer Lackierkabine.

Die Behandlungseinrichtung 118 umfasst ein Gehäuse 120, welches einen Behandlungstunnel 122 begrenzt und Seitenwände 124, eine Decke 126 und einen Tunnelboden 128 umfasst. Der Tunnelboden 128 weist einen zu der Verbindungseinrichtung 86 der Transportwagen 32 komplementären Verbindungsdurchgang 130 auf, der zu einem unterhalb des Behandlungstunnels 122 angeordneten Fahrraum 132 für das Transportwagen-Fahrwerk 80 führt, in welchem das Schienensystem 34 untergebracht ist.

Auf eine Trennung eines Fahrraums 132 und eines Behandlungstunnels 122 durch einen Tunnelboden 128 kann stets dann verzichtet werden, wenn keine Gefahr besteht, dass die Komponenten und Bauteile des Fördersystems 26 bei der Behandlung in Mitleidenschaft gezogen werden.

Der Fahrraum 132 kann zur Umgebung der Behandlungseinrichtung 118 hin offen sein; jedenfalls muss kein eigenes Gehäuse für den Fahrraum 132 vorhanden sein. Bei einer nicht eigens gezeigten Abwandlung ist der Fahrraum 132 durch ein eigenes Gehäuse begrenzt. Alternativ können sich auch die Seitenwände 124 des Gehäuses 120 nach unten über den Tunnelboden 128 hinaus erstrecken, so dass sie den Fahrraum 132 seitlich begrenzen.

Bei der Einfahrt eines mit einer Fahrzeugkarosserie 10 beladenen Transportwagens 32 in eine Behandlungseinrichtung 118 wird die Verbindungseinrichtung 86 des Transportwagens 32 also gleichsam in den Verbindungsdurchgang 130 des Tunnelbodens 128 eingefädelt. Wenn die Fahrzeugkarosserien 10 dann durch den Behandlungstunnel 122 gefördert werden, bewegt sich das Transportwagen-Fahrwerk 80 im Fahrraum 132 und führt die Befestigungseinrichtung 76 im Behandlungstunnel 122 mit sich, wobei sich die Verbindungseinrichtung 86, d.h. beim vorliegenden Ausführungsbeispiel die Gelenkstreben 88 und 90, durch den Verbindungsdurchgang 130 im Tunnelboden 128 hindurch erstreckt.

Wie in den Figuren 4 und 5 zu erkennen ist, ist der Verbindungsdurchgang 130 beim vorliegenden Ausführungsbeispiel passend zu den vertikal verlaufenden Gelenkstreben 88, 90 als vertikaler Durchgangsschlitz 134 ausgebildet. In diesem Fall könnte die Tunnelatmosphäre bei entsprechenden Strömungsverhältnissen ohne Gegenmaßnahmen weitgehend ungehindert aus dem Behandlungstunnel 122 durch den Verbindungsdurchgang 130 nach unten in den Fahrraum 132 einströmen.

Bei einem Trockner ist die Tunnelatmosphäre mit Lösemittel belastet. Bei einer Lackiereinrichtung trägt die Tunnelatmosphäre insbesondere Lack-Overspray mit sich, welcher sich dann auf dem Transportwagen-Fahrwerk 80 ablagern könnte.

Um ein solches Ausströmen der Tunnelatmosphäre aus dem Behandlungstunnel 122 zu verhindern, sind ergänzend Abschirmmittel 136 vorgesehen, durch welche ein Kontakt wenigstens der Transportwagen-Fahrwerke 80 mit der Tunnelatmosphäre durch den Verbindungsdurchgang 130 hindurch zumindest vermindert wird. Ebenso kann das Nachströmen von Atmosphäre aus dem Fahrraum 132 in den Behandlungstunnel 122 reduziert werden, um eine stabile Atmosphäre im Behandlungstunnel 122 aufrechtzuerhalten. Nur in Figur 5 sind Abschirmmittel 96 lediglich schematisch angedeutet.

Bei dem oben erläuterten Ausführungsbeispiel sind die Behandlungseinrichtungen 20.i-j so konzipiert, dass jeweils eine Tragschiene 36 vorgesehen ist. Bei einer nicht eigens gezeigten Abwandlung können die Behandlungseinrichtungen 20.i-j breiter ausgebildet sein, so dass zwei oder auch mehr parallele Schienenstränge der Tragschiene 36 durch die Behandlungseinrichtungen 20.i-j führen. Hierzu weisen die jeweiligen Tunnelböden 128 dann in entsprechendem Abstand mehrere Verbindungsdurchgänge 130 auf. So können dann mehrere Gegenstände, insbesondere Fahrzeugkarosserien 10, jeweils auf einem der Schienenstränge der Tragschiene 36 durch die Behandlungseinrichtung 20.i-j geführt werden. Bei der Temperiervorrichtung 22 können auf diese Weise dann mehrere Fahrzeugkarosserien 10 durch die Temperiereinrichtungen 20.1-j geführt werden, die von unterschiedlichen vorhergehenden Behandlungseinrichtungen 20.i-j kommen.

## Patentansprüche

1. Temperiervorrichtung zum Temperieren von Gegenständen (10), insbesondere von Fahrzeugkarosserien (10), mit
a) n Temperierbereichen (24.k; k=1 bis k=n), in denen jeweils eine Temperatur T.k herrscht, wobei n ≥ 2 ist;
b) einem Fördersystem (26), welches eine Vielzahl von Transportwagen (32) mit einer Befestigungseinrichtung (76) für wenigstens einen Gegenstand (10) umfasst, auf welchen die Gegenstände (10) durch die Temperierbereiche (24.k) förderbar sind, wobei
c) die Temperierbereiche (24.k) entlang eines Temperierstranges (38) des Fördersystems (26) unmittelbar aufeinanderfolgend angeordnet sind;
**dadurch gekennzeichnet, dass**
d) das Fördersystem (26) und die Temperierbereiche (24.k) so ausgebildet sind, dass die Gegenstände (10) wahlweise
da) durch alle n Temperierbereiche (24.k)
oder
db) durch eine Anzahl N der Temperierbereiche (24.k) mit N<n förderbar sind.

2. Temperiervorrichtung nach Anspruch 1, **dadurch gekennzeichnet, dass**
a) der Temperierstrang (38) des Fördersystems (26) für jeden vorhandenen Temperierbereich (24.k) einen Zuführabschnitt (40) definiert, wobei zwei auf dem Temperierstrang (38) benachbart angeordnete Temperierbereiche (24.k) durch einen jeweiligen Zuführabschnitt (40) fördertechnisch miteinander verbunden sind;
b) wenigstens einer der Zuführabschnitte (40) des Temperierstranges (38) über wenigstens eine Überführungseinrichtung (42) mit einem Bypassstrang (44) des Fördersystems (26) verbunden ist, welcher an zumindest einer Temperiereinrichtung (20.1-j) vorbei führt.

3. Temperiervorrichtung nach Anspruch 2, **dadurch gekennzeichnet, dass** mehrere oder alle Zuführabschnitte (40) des Temperierstranges (38) über wenigstens eine Überführungseinrichtung (42) mit dem Bypassstrang (44) des Fördersystems (26) verbunden sind.

4. Temperiervorrichtung nach Anspruch 3, **dadurch gekennzeichnet, dass** das Fördersystem (26) ein Schienensystem (34) umfasst, auf welchem die Transportwagen (32) verfahrbar sind, und dass eine jeweilige Überführungseinrichtung (42) durch eine Weicheneinrichtung (46) ausgebildet ist.

5. Temperiervorrichtung nach einem der Ansprüche 1 bis 4, **dadurch gekennzeichnet, dass** bei dem Fördersystem (26) jeder Transportwagen (32) ein Transportwagen-Fahrwerk (80) umfasst, welches mittels einer Verbindungseinrichtung (86) mit der Befestigungseinrichtung (76) gekoppelt ist.

6. Temperiervorrichtung nach Anspruch 5, **dadurch gekennzeichnet, dass** in wenigstens einem Temperierbereich (24.k) eine Behandlungseinrichtung (20.1-j; 118) angeordnet ist, in der die Gegenstände (10) temperiert werden und welche ein Gehäuse (120) umfasst, in dem ein Behandlungstunnel (122) mit einem Tunnelboden (128) untergebracht ist, wobei der Tunnelboden (128) einen Verbindungsdurchgang (130) aufweist und ein unterhalb des Behandlungstunnels (122) angeordneter Fahrraum (132) für das Transportwagen-Fahrwerk (80) vorhanden ist, derart, dass das Transportwagen-Fahrwerk (80) im Fahrraum (132) bewegbar ist, wobei die Befestigungseinrichtung (76) im Behandlungstunnel (122) mitgeführt wird und sich die Verbindungseinrichtung (86) durch den Verbindungsdurchgang (130) hindurch erstreckt.

7. Temperiervorrichtung nach Anspruch 6, **dadurch gekennzeichnet, dass** die Behandlungseinrichtung (20.1.j) Abschirmmittel (136) umfasst, durch welche ein Kontakt wenigstens der Transportwagen-Fahrwerke (80) mit der Tunnelatmosphäre durch den Verbindungsdurchgang (130) hindurch zumindest vermindert wird.

8. Temperiervorrichtung nach einem der Ansprüche 5 bis 7, **dadurch gekennzeichnet, dass** bei dem Fördersystem (26) das Transportwagen-Fahrwerk (80) der Transportwagen (32) eine in Transportrichtung vorauseilende Vorläufereinheit (82) und eine in Transportrichtung nacheilende Nachläufereinheit (84) umfasst.

9. Temperiervorrichtung nach Anspruch 8, **dadurch gekennzeichnet, dass** bei dem Fördersystem (26) die Verbindungseinrichtung (86) der Transportwagen (32) wenigstens zwei vertikale Gelenkstreben (88, 90) umfasst, welche die Vorläufereinheit (82) und die Nachläufereinheit (84) mit der Befestigungseinrichtung (76) koppeln.

10. Temperiervorrichtung nach einem der Ansprüche 5 bis 9, **dadurch gekennzeichnet, dass** bei dem Fördersystem (26) die Transportwagen (32) jeweils ein eigenes Antriebssystem (94.1, 94.2, 98.1, 98.2) mit sich führen, so dass die Transportwagen (32) unabhängig voneinander antreibbar und verfahrbar sind.

11. Temperiervorrichtung nach Anspruch 10, **dadurch gekennzeichnet, dass** bei dem Fördersystem (26) das Antriebssystem (54.1, 54.2, 58.1, 58.2) der Transportwagen (32) wenigstens eine Antriebsrolle (94.1, 94.2) umfasst, die von dem Transportwagen-Fahrwerk (80) gelagert und auf einer Antriebslauffläche (56) des Schienensystems (30) abrollbar ist, und wenigstens einen Antriebsmotor (98.1, 98.2) für die wenigstens eine Antriebsrolle (94.1, 94.2) umfasst, welcher von dem Transportwagen-Fahrwerk (80) mitgeführt wird.

12. Temperiervorrichtung nach einem der Ansprüche 5 bis 11, **dadurch gekennzeichnet, dass** bei dem Fördersystem (26) wenigstens einer der Transportwagen (32) eine autarke Energieversorgungseinrichtung (110) mit sich führt, mittels welcher der wenigstens eine Antriebsmotor (98.1, 98.2) des Transportwagens (32) mit Energie versorgbar ist.

13. Temperiervorrichtung nach Anspruch 12, **dadurch gekennzeichnet, dass** bei dem Fördersystem (26) die autarke Energieversorgungseinrichtung (110) wenigstens einen wiederaufladbaren Energiespeicher (112) umfasst.

14. Temperiervorrichtung nach einem der Ansprüche 1 bis 13, **dadurch gekennzeichnet, dass** die Gegenstände (10) mittels des Fördersystems (26) in beliebiger Abfolge durch zwei, mehrere oder alle Temperierzonen (24.k) förderbar sind.

15. Oberflächenbehandlungsanlage zur Oberflächenbehandlung von Gegenständen (10), insbesondere von Fahrzeugkarosserien (10), mit mehreren Anlagenzonen (20.i), wobei wenigstens eine Anlagenzone (20.i) eine Temperierzone (20.1) ist, in welcher die Gegenstände (10) temperierbar sind,
**dadurch gekennzeichnet, dass**
in der Temperierzone (20.1) eine Temperiervorrichtung (22) nach einem der Ansprüche 1 bis 14 angeordnet ist.

16. Oberflächenbehandlungsanlage nach Anspruch 15, **dadurch gekennzeichnet, dass** das Fördersystem (26) der Temperiervorrichtung (22) das Fördersystem (26) der Oberflächenbehandlungsanlage (16) ist, so dass die Gegenstände (10) mit ein und demselben Fördersystem (26) durch die Anlagenzonen (20.i) der Anlage (16) förderbar sind.

17. Oberflächenbehandlungsanlage nach Anspruch 16, **dadurch gekennzeichnet, dass** in wenigstens einer Anlagenzone (20.i), die nicht die Temperierzone (20.1) ist, wenigstens eine Behandlungseinrichtung (20.i-j; 118) angeordnet ist, in der die Gegenstände (10) behandelt werden und welche ein Gehäuse (120) umfasst, in dem ein Behandlungstunnel (122) mit einem Tunnelboden (128) untergebracht ist, wobei der Tunnelboden (128) einen Verbindungsdurchgang (130) aufweist und ein unterhalb des Behandlungstunnels (122) angeordneter Fahrraum (132) für das Transportwagen-Fahrwerk (80) vorhanden ist, derart, dass das Transportwagen-Fahrwerk (80) im Fahrraum (132) bewegbar ist, wobei die Befestigungseinrichtung (76) im Behandlungstunnel (122) mitgeführt wird und sich die Verbindungseinrichtung (86) durch den Verbindungsdurchgang (130) hindurch erstreckt.

18. Oberflächenbehandlungsanlage nach Anspruch 17, **dadurch gekennzeichnet, dass** die Behandlungseinrichtung (20.i.j) Abschirmmittel (136) umfasst, durch welche ein Kontakt wenigstens der Transportwagen-Fahrwerke (80) mit der Tunnelatmosphäre durch den Verbindungsdurchgang (130) hindurch zumindest vermindert wird.

19. Oberflächenbehandlungsanlage nach einem der Ansprüche 15 bis 18, **dadurch gekennzeichnet, dass** die Gegenstände (10) mittels des Fördersystems (26) in beliebiger Abfolge durch eine, mehrere oder alle Anlagenzonen (20.i) oder bei Rückbezug auf Anspruch 17 oder 18 in beliebiger Abfolge durch eine, mehrere oder alle der Behandlungseinrichtungen (20.i-j) einer, mehrerer oder aller Anlagenzonen (20.i) gefördert werden können.

20. Fertigungsanlage zur Herstellung von Produkten, insbesondere von Fahrzeugen, mit einer Oberflächenbehandlungsanlage (16) nach einem der Ansprüche 15 bis 19.

21. Verfahren zur Herstellung von Produkten, insbesondere von Fahrzeugen, bei welchem
a) Gegenstände, insbesondere Fahrzeugkarosserien (10), durch mehrere Anlagenzonen (12.i, 14.i, 18.i, 20.i) einer Fertigungsanlage (8) zur Herstellung von Produkten gefördert werden;
wobei
b) die Gegenstände für einen Temperierprozess mit Hilfe einer Temperiervorrichtung (22) temperiert werden, bei welcher es n Temperierbereiche (24.k; k=1 bis k=n) gibt, in denen jeweils eine Temperatur T.k herrscht, wobei n ≥ 2 ist,
wobei eine Temperiervorrichtung (22) verwendet wird, bei welcher die Temperierbereiche (24.k) entlang eines Temperierstranges (38) unmittelbar aufeinanderfolgend angeordnet sind;
**dadurch gekennzeichnet, dass**
c)
Gegenstände abhängig von dem durchzuführenden Temperierprozess wahlweise
ca) durch alle n Temperierbereiche (24.k);
oder
cb) durch eine Anzahl N der Temperierbereiche (24.k) mit N<n gefördert werden.

22. Verfahren nach Anspruch 21, **dadurch gekennzeichnet, dass** eine Temperiervorrichtung nach einem der Ansprüche 1 bis 14 verwendet wird.

23. Verfahren nach Anspruch 21, **dadurch gekennzeichnet, dass** eine Fertigungsanlage nach Anspruch 20 verwendet wird.

## Claims

1. Temperature controlling apparatus for controlling the temperature of objects (10), in particular vehicle bodies (10), having
a) n temperature control regions (24.k; k=1 to k=n), in which a respective temperature T.k prevails, wherein n ≥ 2;
b) a conveying system (26) comprising a multiplicity of transporting carriages (32) which have a fastening device (76) for at least one object (10) and on which the objects (10) can be conveyed through the temperature control regions (24.k),
wherein
c) the temperature control regions (24.k) follow one another in direct succession along a temperature control line (38) of the conveying system (26);
**characterized in that**
d) the conveying system (26) and the temperature control regions (24.k) are designed such that the objects (10) can be conveyed selectively
da) through all n temperature control regions (24.k)
or
db) through a number N of the temperature control regions (24.k), with N < n.

2. Temperature controlling apparatus according to Claim 1, **characterized in that**
a) the temperature control line (38) of the conveying system (26) defines a feed section (40) for each temperature control region (24.k) present, wherein two adjacent temperature control regions (24.k) on the temperature control line (38) are connected to one another in conveying terms by a respective feed section (40) ;
b) at least one of the feed sections (40) of the temperature control line (38) is connected to a bypass line (44) of the conveying system (26) via at least one transferring device (42), the bypass line bypassing at least one temperature control device (20.1-j).

3. Temperature controlling apparatus according to Claim 2, **characterized in that** multiple or all feed sections (40) of the temperature control line (38) are connected to the bypass line (44) of the conveying system (26) via at least one transferring device (42).

4. Temperature controlling apparatus according to Claim 3, **characterized in that** the conveying system (26) comprises a rail system (34), on which the transporting carriages (32) can be moved, and **in that** a respective transferring device (42) is formed by a diverting device (46).

5. Temperature controlling apparatus according to one of Claims 1 to 4, **characterized in that**, in the conveying system (26), each transporting carriage (32) comprises a transporting-carriage chassis (80), which is coupled to the fastening device (76) by means of a connecting device (86).

6. Temperature controlling apparatus according to Claim 5, **characterized in that** in at least one temperature control region (24.k) there is a treatment device (20.1-j; 118), in which the temperature of the objects (10) is controlled and which comprises a housing (120) in which a treatment tunnel (122) having a tunnel floor (128) is accommodated, wherein the tunnel floor (128) has a connecting passage (130) and there is a travel space (132), disposed below the treatment tunnel (122), for the transporting-carriage chassis (80), such that the transporting-carriage chassis (80) is movable in the travel space (132), wherein the fastening device (76) is carried along in the treatment tunnel (122) and the connecting device (86) extends through the connecting passage (130).

7. Temperature controlling apparatus according to Claim 6, **characterized in that** the treatment device (20.1.j) comprises shielding means (136), by way of which contact of at least the transporting-carriage chassis (80) with the tunnel atmosphere through the connecting passage (130) is at least reduced.

8. Temperature controlling apparatus according to one of Claims 5 to 7, **characterized in that**, in the conveying system (26), the transporting-carriage chassis (80) of the transporting carriages (32) comprises a leading unit (82) running ahead in the transporting direction and a trailing unit (84) running behind in the transporting direction.

9. Temperature controlling apparatus according to Claim 8, **characterized in that**, in the conveying system (26), the connecting device (86) of the transporting carriages (32) comprises at least two vertical joint struts (88, 90) which couple the leading unit (82) and the trailing unit (84) to the fastening device (76).

10. Temperature controlling apparatus according to one of Claims 5 to 9, **characterized in that**, in the conveying system (26), the transporting carriages (32) each carry their own drive system (94.1, 94.2, 98.1, 98.2), with the result that the transporting carriages (32) can be driven and moved independently of one another.

11. Temperature controlling apparatus according to Claim 10, **characterized in that**, in the conveying system (26), the drive system (54.1, 54.2, 58.1, 58.2) of the transport carriages (32) comprises at least one drive roller (94.1, 94.2), which is supported by the transporting-carriage chassis (80) and can roll on a drive running surface (56) of the rail system (30), and at least one drive motor (98.1, 98.2) for the at least one drive roller (94.1, 94.2), the drive motor being carried by the transporting-carriage chassis (80).

12. Temperature controlling apparatus according to one of Claims 5 to 11, **characterized in that**, in the conveying system (26), at least one of the transporting carriages (32) carries a dedicated energy supply device (110), by means of which the at least one drive motor (98.1, 98.2) of the transporting carriage (32) can be supplied with energy.

13. Temperature controlling apparatus according to Claim 12, **characterized in that**, in the conveying system (26), the dedicated energy supply device (110) comprises at least one rechargeable energy store (112).

14. Temperature controlling apparatus according to one of Claims 1 to 13, **characterized in that** the objects (10) can be conveyed by means of the conveying system (26) in any desired sequence through two, more or all of the temperature control zones (24.k).

15. Surface treatment facility for the surface treatment of objects (10), in particular vehicle bodies (10), having multiple facility zones (20.i), wherein at least one facility zone (20.i) is a temperature control zone (20.1) in which the temperature of the objects (10) is controlled,
**characterized in that**
a temperature controlling apparatus (22) according to one of Claims 1 to 14 is disposed in the temperature control zone (20.1).

16. Surface treatment facility according to Claim 15, **characterized in that** the conveying system (26) of the temperature controlling apparatus (22) is the conveying system (26) of the surface treatment facility (16), such that the objects (10) can be conveyed through the facility zones (20.i) of the facility (16) by one and the same conveying system (26).

17. Surface treatment facility according to Claim 16, **characterized in that** in at least one facility zone (20.i) which is not the temperature control zone (20.1), there is at least one treatment device (20.i-j; 118), in which the objects (10) are treated and which comprises a housing (120), in which a treatment tunnel (122) having a tunnel floor (128) is accommodated, wherein the tunnel floor (128) has a connecting passage (130) and there is a travel space (132), disposed below the treatment tunnel (122), for the transporting-carriage chassis (80), such that the transporting-carriage chassis (80) is movable in the travel space (132), wherein the fastening device (76) is carried along in the treatment tunnel (122) and the connecting device (86) extends through the connecting passage (130).

18. Surface treatment facility according to Claim 17, **characterized in that** the treatment device (20.i.j) comprises shielding means (136), by way of which contact of at least the transporting-carriage chassis (80) with the tunnel atmosphere through the connecting passage (130) is at least reduced.

19. Surface treatment facility according to one of Claims 15 to 18, **characterized in that** the objects (10) can be conveyed by means of the conveying system (26) in any desired sequence through one, more or all of the facility zones (20.i) or, with reference back to Claim 17 or 18, in any desired sequence through one, more or all of the treatment devices (20.i-j) of one, more or all of the facility zones (20.1).

20. Manufacturing facility for producing products, in particular vehicles, having a surface treatment facility (16) according to one of Claims 15 to 19.

21. Method for producing products, in particular vehicles, in the course of which
a) objects, in particular vehicle bodies (10), are conveyed through multiple facility zones (12.i, 14.i, 18.i, 20.i) of a manufacturing facility (8) for producing products;
wherein
b) the temperature of the objects is controlled for a temperature control process using a temperature controlling apparatus (22), in the case of which there are n temperature control regions (24.k; k=1 to k=n), in which a respective temperature T.k prevails, wherein n ≥ 2,
wherein use is made of a temperature controlling apparatus (22) in which the temperature control regions (24.k) follow one another in direct succession along a temperature control line (38);
**characterized in that**,
c) depending on the temperature control process to be carried out, objects are conveyed selectively
ca) through all n temperature control regions (24.k); or
cb) through a number N of the temperature control regions (24.k), with N < n.

22. Method according to Claim 21, **characterized in that** a temperature controlling apparatus according to one of Claims 1 to 14 is used.

23. Method according to Claim 21, **characterized in that** a manufacturing facility according to Claim 20 is used.

## Revendications

1. Dispositif de régulation de température destiné à réguler la température d'objets (10), en particulier de carrosseries de véhicules (10), ledit dispositif comprenant
a) n zones de régulation de température (24.k ; k=1 à k=n), dans chacune desquelles règne une température T.k, avec n ≥ 2 ;
b) un système d'acheminement (26) qui comprend un grand nombre de chariots de transport (32) qui sont pourvus d'un module de fixation (76) destiné à au moins un objet (10) et vers lesquels les objets (10) peuvent être acheminés à travers les zones de régulation de température (24.k),
c) les zones de régulation de température (24.k) étant disposées directement les unes après les autres le long d'une ligne de régulation de température (38) du système d'acheminement (26) ;
**caractérisé en ce que**
d) le système d'acheminement (26) et les zones de régulation de température (24.k) sont conçus de manière à acheminer les objets (10) au choix
da) à travers toutes les n zones de régulation de température (24.k)
ou
db)à travers un nombre N de zones de régulation de température (24.k), avec N < n.

2. Dispositif de régulation de température selon la revendication 1, **caractérisé en ce que**
a) la ligne de régulation de température (38) du système d'acheminement (26) définit une portion d'alimentation (40) pour chaque zone de régulation de température existante (24.k), deux zones de régulation de température (24.k) disposées de manière adjacente l'une à l'autre sur la ligne de régulation de température (38) étant reliées l'une à l'autre en termes de technique de convoyage par une portion d'alimentation respective (40) ;
b) au moins une des portions d'alimentation (40) de la ligne de régulation de température (38) est reliée à une ligne de dérivation (44) du système d'acheminement (26), qui passe devant au moins un module de régulation de température (20.1-j), par le biais d'au moins un module de transfert (42).

3. Dispositif de régulation de température selon la revendication 2, **caractérisé en ce qu'**une pluralité de portions d'alimentation (40), ou la totalité de celles-ci, de la ligne de régulation de température (38) sont reliées à la ligne de dérivation (44) du système d'acheminement (26) par le biais d'au moins un module de transfert (42).

4. Dispositif de régulation de température selon la revendication 3, **caractérisé en ce que** le système d'acheminement (26) comprend un système de rails (34) sur lequel les chariots de transport (32) peuvent être déplacés, et **en ce qu'**un module de transfert respectif (42) est formé par un module d'aiguillage (46).

5. Dispositif de régulation de température selon l'une des revendications 1 à 4, **caractérisé en ce que**, dans le système d'acheminement (26), chaque chariot de transport (32) comprend un mécanisme de roulement de chariot de transport (80) qui est accouplé au module de fixation (76) au moyen d'un module de liaison (86).

6. Dispositif de régulation de température selon la revendication 5, **caractérisé en ce qu'**un module de traitement (20.1-j ; 118), dans lequel les objets (10) sont régulés en température et qui comprend un boîtier (120) dans lequel est ménagé un tunnel de traitement (122) pourvu d'un fond de tunnel (128), est disposé dans au moins une zone de régulation de température (24.k), le fond de tunnel (128) comportant un passage de liaison (130) et un espace de roulement (132), disposé au-dessous du tunnel de traitement (122), étant prévu pour le mécanisme de roulement de chariot de transport (80) de sorte que le mécanisme de roulement de chariot de transport (80) puisse être déplacé dans l'espace de roulement (132), le module de fixation (76) étant conjointement guidé dans le tunnel de traitement (122) et le module de liaison (86) s'étendant à travers le passage de liaison (130).

7. Dispositif de régulation de température selon la revendication 6, **caractérisé en ce que** le module de traitement (20.1.j) comporte des moyens de protection (136) permettant au moins de réduire le contact au moins du mécanisme de roulement de chariot de transport (80) avec l'atmosphère du tunnel à travers le passage de liaison (130).

8. Dispositif de régulation de température selon l'une des revendications 5 à 7, **caractérisé en ce que**, dans le système d'acheminement (26), le mécanisme de roulement de chariot de transport (80) du chariot de transport (32) comporte une unité avant (82) qui est en avant dans la direction de transport et une unité arrière (84) qui est en arrière dans la direction de transport.

9. Dispositif de régulation de température selon la revendication 8, **caractérisé en ce que**, dans le système d'acheminement (26), le module de liaison (86) du chariot de transport (32) comporte au moins deux montants articulés verticaux (88, 90) qui accouplent l'unité avant (82) et l'unité arrière (84) au module de fixation (76).

10. Dispositif de régulation de température selon l'une des revendications 5 à 9, **caractérisé en ce que**, dans le système d'acheminement (26), les chariots de transport (32) comportent chacun leur propre système d'entraînement (94.1, 94.2, 98.1, 98.2) de sorte que les chariots de transport (32) puissent être entraînés et déplacés indépendamment les uns des autres.

11. Dispositif de régulation de température selon la revendication 10, **caractérisé en ce que**, dans le système d'acheminement (26), le système d'entraînement (54.1, 54.2, 58.1, 58.2) du chariot de transport (32) comprend au moins un galet d'entraînement (94.1, 94.2) qui est logé dans le mécanisme de roulement de chariot de transport (80) et qui peut rouler sur une surface de roulement d'entraînement (56) du système de rails (30) et comprend au moins un moteur d'entraînement (98.1, 98.2) destiné à l'au moins un galet d'entraînement (94.1, 94.2) qui est conjointement guidé par le mécanisme de roulement de chariot de transport (80).

12. Dispositif de régulation de température selon l'une des revendications 5 à 11, **caractérisé en ce que**, dans le système d'acheminement (26), au moins un des chariots de transport (32) guide conjointement un mécanisme d'alimentation en énergie autonome (110) permettant d'alimenter en énergie l'au moins un moteur d'entraînement (98.1, 98.2) du chariot de transport (32).

13. Dispositif de régulation de température selon la revendication 12, **caractérisé en ce que**, dans le système d'acheminement (26), le module d'alimentation en énergie autonome (110) comporte au moins un accumulateur d'énergie rechargeable (112).

14. Dispositif de régulation de température selon l'une des revendications 1 à 13, **caractérisé en ce que** les objets (10) peuvent être acheminés au moyen du système d'acheminement (26) dans un ordre quelconque à travers deux ou plusieurs zones de régulation de température (24.k), ou la totalité de celles-ci.

15. Installation de traitement de surface destinée au traitement de surface d'objets (10), en particulier de carrosseries de véhicules (10), ladite installation comprenant une pluralité de zones d'installation (20.i), au moins une zone d'installation (20.i) étant une zone de régulation de température (20.1) dans laquelle les objets (10) sont régulés en température, **caractérisée en ce que**
un dispositif de régulation de température (22) selon l'une des revendications 1 à 14 est disposé dans la zone de régulation de température (20.1).

16. Installation de traitement de surface selon la revendication 15, **caractérisée en ce que** le système d'acheminement (26) du dispositif de régulation de température (22) est le système d'acheminement (26) de l'installation de traitement de surface (16) de sorte que les objets (10) puissent être acheminés avec un seul et même système d'acheminement (26) à travers les zones d'installation (20.i) de l'installation (16).

17. Installation de traitement de surface selon la revendication 16, **caractérisée en ce qu'**au moins un dispositif de traitement (20.i-j ; 118), dans lequel les objets (10) sont traités et qui comprend un boîtier (120) dans lequel est ménagé un tunnel de traitement (122) pourvu d'un fond de tunnel (128), est disposé dans au moins une zone d'installation (20.i) qui n'est pas la zone de régulation de température (20.1), le fond de tunnel (128) comportant un passage de liaison (130) et un espace de roulement (132), disposé au-dessous du tunnel de traitement (122), étant prévu pour le mécanisme de roulement de chariot de transport (80) de sorte que le mécanisme de roulement de chariot de transport (80) peut être déplacé dans l'espace de roulement (132), le module de fixation (76) étant conjointement guidé dans le tunnel de traitement (122) et le module de liaison (86) s'étendant à travers le passage de liaison (130).

18. Installation de traitement de surface selon la revendication 17, **caractérisée en ce que** le module de traitement (20.i.j) comprend des moyens de protection (136) permettant au moins de réduire le contact au moins du mécanisme de roulement de chariot de transport (80) avec l'atmosphère de tunnel à travers le passage de liaison (130).

19. Installation de traitement de surface selon l'une des revendications 15 à 18, **caractérisée en ce que** les objets (10) peuvent être acheminés au moyen du système d'acheminement (26) dans un ordre quelconque à travers une ou plusieurs zones d'installation (20.i) ou la totalité de celles-ci ou, si l'on se réfère à la revendication 17 ou 18, dans un ordre quelconque à travers un ou plusieurs dispositifs de traitement (20.i-j), ou la totalité de ceux-ci, d'une ou de plusieurs zones d'installation (20.i) ou la totalité de celles-ci.

20. Installation de production destinée à la production de produits, notamment de véhicules, ladite installation de production comprenant une installation de traitement de surface (16) selon l'une des revendications 15 à 19.

21. Procédé de production de produits, notamment de véhicules, procédé dans lequel
a) des objets, en particulier des carrosseries de véhicules (10), sont acheminés à travers une pluralité de zones d'installation (12.i, 14.i, 18.i, 20.i) d'une installation de production (8) destinée à la production de produits ;
b) les objets destinés à un processus de régulation de température étant régulés en température à l'aide d'un dispositif de régulation de température (22) dans lequel il y a n zones de régulation de température (24. k ; k=1 à k=n), dans chacune desquelles règne une température T.k, avec n ≥ 2,
un dispositif de régulation de température (22) étant utilisé dans lequel les zones de régulation de température (24.k) sont disposées directement les unes après les autres le long d'une ligne de régulation de température (38) ;
**caractérisé en ce que**
c)
des objets sont acheminés en fonction de la régulation de température au choix
ca) à travers toutes les n zones de régulation de température (24.k) ;
ou
cb) à travers un nombre N de zones de régulation de température (24.k), avec N < n.

22. Procédé selon la revendication 21, **caractérisé en ce qu'**un dispositif de régulation de température selon l'une des revendications 1 à 14 est utilisé.

23. Procédé selon la revendication 21, **caractérisé en ce qu'**une installation de production selon la revendication 20 est utilisée.
